(19) Europäisches Patentamt
European Patent Office
Office européen des brevets

(11) **EP 4 675 965 A1**

(12) **EUROPEAN PATENT APPLICATION**
published in accordance with Art. 153(4) EPC

(43) Date of publication:
**07.01.2026 Bulletin 2026/02**

(21) Application number: **24784115.8**

(22) Date of filing: **26.03.2024**

(51) International Patent Classification (IPC):
*H04L 5/00* (2006.01)

(52) Cooperative Patent Classification (CPC):
**H04L 5/00**

(86) International application number:
**PCT/CN2024/083865**

(87) International publication number:
**WO 2024/208030 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310388840**

(71) Applicant: **HUAWEI TECHNOLOGIES CO., LTD.
Shenzhen, Guangdong 518129 (CN)**

(72) Inventors:
• **LIU, Xianda**
  **Shenzhen, Guangdong 518129 (CN)**
• **GAO, Xiang**
  **Shenzhen, Guangdong 518129 (CN)**
• **ZHANG, Zhening**
  **Shenzhen, Guangdong 518129 (CN)**
• **LIU, Kunpeng**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, AND APPARATUS**

(57) This application discloses a communication method and apparatus. The method includes: A terminal device receives indication information, where the indication information indicates M combinations, and each combination includes one CS value and one comb offset value; or each combination includes a hopping value of one CS value and a hopping value of one comb offset value, where M is a positive integer. Then, the terminal device determines, based on the indication information, a first pseudo-random sequence, and a first time unit, a target CS value and a target comb offset value that correspond to a reference signal in the first time unit. Then, the terminal device sends the reference signal in the first time unit based on the target CS value and the target comb offset value. According to the method, the terminal device uses one combination of a comb offset value and a CS value in the M combinations, so that a conflict between CS values or comb offset values used by different terminal devices can be avoided, to maximize randomization of interference between reference signals of any two terminal devices in a cell.

FIG. 5

EP 4 675 965 A1

**Description**

This application claims priority to Chinese Patent Application No. 202310388840.9, filed with the China National Intellectual Property Administration on April 7, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

A network device measures and estimates a sounding reference signal (sounding reference signal, SRS) sent by a terminal device, and may obtain a channel estimation result between the terminal device and the network device based on channel reciprocity, to schedule data based on the obtained channel estimation result.

SRSs sent by different terminal devices may interfere with each other. To reduce interference between the SRSs, a cyclic shift hopping (cs hopping, CSH) technology and a comb offset hopping (comb offset hopping, COH) technology are introduced, and the interference between the SRSs may be randomized by using the CSH or the COH. To maximize randomization of the interference between the SRSs, both the COH and the CSH may be used.

However, some terminal devices (for example, a terminal device 1) may not support the COH or the CSH. Consequently, a terminal device (for example, a terminal device 2) that supports the COH and the CSH cannot use the COH or the CSH, and randomization of the interference between the SRSs cannot be maximized. For example, a port of an SRS of the terminal device 1 occupies a comb offset 1, and consequently the terminal device 2 cannot use the comb offset 1. Otherwise, a comb offset conflict occurs between the terminal device 1 and the terminal device 2.

SUMMARY

Embodiments of this application provide a communication method and apparatus, to reduce interference between SRSs of different terminal devices.

To achieve the foregoing objectives, the following technical solutions are used in embodiments of this application.

According to a first aspect, an embodiment of this application provides a first communication method. The method may be performed by a first communication apparatus. The first communication apparatus may be a communication device or a communication apparatus, for example, a chip system, that can support a communication device in implementing a function needed by the method. The first communication apparatus may be one of two communication ends. For example, the two communication ends include a network device and a terminal device. The first communication apparatus may be the terminal device, or a unit, a function module, or the like inside the terminal device. For example, the first communication apparatus may be a chip disposed in the terminal device, or the first communication apparatus is another component configured to implement a function of the terminal apparatus. The following describes the method provided in the first aspect by using an example in which the first communication apparatus is the terminal device.

The communication method includes: The terminal device receives indication information, where the indication information indicates M combinations, and each combination includes one cyclic redundancy (cyclic shift, CS) value and one comb offset value; or each combination includes a hopping value of one CS value and a hopping value of one comb offset value, where M is a positive integer. Then, the terminal device determines, based on the indication information, a first pseudo-random sequence, and a first time unit, a target CS value and a target comb offset value that correspond to a reference signal in the first time unit. Then, the terminal device sends the reference signal in the first time unit based on the target CS value and the target comb offset value.

The target CS value is a CS value used to generate a sequence of reference signals in the first time unit, and the target comb offset value is a comb offset value used to determine a comb occupied by the reference signal in the first time unit. That each of the M combinations includes one CS value and one comb offset value is equivalent to that a set of comb offset values respectively corresponding to M CS values included in the M combinations is specified, or that a set of CS values respectively corresponding to M comb offset values included in the M combinations is specified. Similarly, that each of the M combinations includes a hopping value of one CS value and a hopping value of one comb offset value is equivalent to that a hopping value of a comb offset value corresponding to a hopping value of one CS value or a hopping value of a CS value corresponding to a hopping value of one comb offset value is specified in each of the M combinations.

A comb offset value corresponding to one CS value may be a part of all comb offset values (comb quantities), and the part of the comb offset values are referred to as available comb offset values corresponding to the CS value. In the method, an available CS value and an available comb offset value of the terminal device are indicated based on the indication information, or an available range of a CS value and an available range of a comb offset value are specified based on the indication information. The target comb offset value used by the terminal device is within a specified available range of the comb offset value, and the target CS value used by the terminal device is within a specified available range of the CS value. According to the method, a conflict between CS values or comb offset values used by different terminal devices can be avoided, so that the terminal devices can use COH and CSH at the same time, to maximize randomization of interference between reference signals of any two terminal devices in a cell.

Optionally, the M combinations correspond to one reference signal resource, and the reference signal resource includes N reference signal ports.

Optionally, the N reference signal ports all correspond to the M combinations.

Optionally, that each of the M combinations includes N CS values and N comb offset values is equivalent to that a set of comb offset values corresponding to each of every N CS values or a set of CS values corresponding to every N comb offset values is specified in the M combinations. Similarly, that each combination includes hopping values of N CS values and hopping values of N comb offset values is equivalent to that hopping values of comb offset values corresponding to the hopping values of the N CS values or hopping values of CS values corresponding to the hopping values of the N comb offset values are specified in each combination.

In a possible implementation, that the terminal device determines, based on the indication information, the first pseudo-random sequence, and the first time unit, the target CS value and the target comb offset value that correspond to the reference signal includes: The terminal device generates a first random number based on the first pseudo-random sequence and the first time unit, where the first random number is used to determine a first combination from the M combinations, and the first combination is used to determine the target CS value and the target comb offset value. The first combination is a combination selected from the M combinations based on the first random number. In the method, the first combination used for randomized transmission may be flexibly indicated to a terminal device based on a resource location occupied by another terminal device (for example, a conventional terminal device), and a CS value and a comb offset value of a reference signal sent by the terminal device in the first time unit are limited based on the first combination. Therefore, a better randomized interference effect can be obtained, a resource conflict with the conventional terminal device can be avoided, and channel estimation accuracy can be improved.

In a possible implementation, a quantity of comb offset values included in the M combinations is greater than or equal to a quantity of comb offset values occupied by the reference signal resource, and a quantity of CS values included in the M combinations is greater than or equal to a quantity of CS values occupied by the reference signal resource. Alternatively, a quantity of available resources indicated by the M combinations is greater than a quantity of resources actually occupied by the reference signal resource.

The quantity of comb offset values indicates a quantity of different comb offset values, and a same comb offset value is not counted. For example, there are three comb offset values: 1, 1, and 2. In this case, a quantity of the three comb offset values is 2. Similarly, the quantity of CS values indicates a quantity of different CS values. Because a quantity of available resources indicated by the M combinations is greater than a quantity of resources actually occupied by the reference signal resource, so that a randomization effect can be maximized as much as possible.

In a possible implementation, the indication information further indicates the M combinations from Q combinations, Q is a positive integer, and Q is greater than or equal to M; and a quantity of comb offset values included in the Q combinations is less than or equal to a comb quantity of the reference signal, and a quantity of CS values included in the Q combinations is less than or equal to a maximum quantity of CS values corresponding to the comb quantity of the reference signal.

The Q combinations may be combinations formed by each of all CS values and each corresponding comb offset value, or may be a set including each of all comb offset values and each corresponding CS value. The M combinations belong to the Q combinations. In the method, the M combinations are indicated from the Q combinations based on the indication information, so that complexity of indicating the M combinations can be reduced.

Optionally, Q=A*B, and a maximum quantity of CS values corresponding to a comb quantity B configured for the reference signal resource is A.

In a possible implementation, the indication information is a bitmap (bitmap) whose length is Q, and a bit that is set to 1 in the bitmap corresponds to the M combinations.

Optionally, at least CS values or comb offset values that correspond to any two bits in the bitmap are different.

In a possible implementation, determining the first combination from the M combinations based on the first random number includes: determining, based on the first random number, a first bit from the bit that is set to 1 in the bitmap and determining a combination corresponding to the first bit as the first combination.

The first combination is obtained by randomly selecting, based on the first random number, one bit from the bit that is set to 1 in the bitmap. According to the method, the randomized first combination may be limited based on an actually occupied resource, so that interference between reference signals of any two terminal devices can be randomized, a resource conflict between the terminal devices can be avoided, and channel estimation accuracy can be improved.

In a possible implementation, each combination includes a hopping value of one CS value and a hopping value of one comb offset value, and that the terminal device determines the target CS value and the target comb offset value based on the first combination includes: For a first port in at least one port of the reference signal, the terminal device determines the target CS value of the first port based on a CS reference value, a CS value in the first combination, and an index of the first port, and determines the target comb offset value of the first port based on a comb offset reference value, a comb offset value in the first combination, and the index of the first port.

For one port of the reference signal (resource), a CS value used by the port may be determined based on an index of the port, a reference value of the CS value, and a hopping value of the CS value in the randomly selected first combination, and a comb offset value used by the port may be determined based on the index of the port, the comb offset reference value, and a hopping value of the comb offset value in the randomly selected first combination. The terminal device does not need to determine a combination in the M combinations to which the comb reference value and the CS value of each port are mapped. Therefore, it is relatively simple to determine a resource location of the port, and processing complexity of the terminal device can be reduced.

It should be understood that each port in the reference signal resource may be determined based on an index of the port, a reference value of a CS value, and the hopping value of the CS value in the randomly selected first combination. Each port corresponds to the same first combination.

In a possible implementation, each combination includes one CS value and one comb offset value, and that the terminal device determines the target CS value and the target comb offset value based on the first combination includes: For a first port in at least one port of the reference signal, the terminal device determines the target CS value of the first port based on a CS value in the first combination and an index of the first port, and determines the target comb offset value of the first port based on a comb offset value in the first combination and the index of the first port.

For one port of the reference signal, a CS value used by the port may be determined based on an index of the port and a CS value in the randomly selected first combination, and a comb offset value used by the port may be determined based on the index of the port and the comb offset value in the randomly selected first combination. A similar mechanism is used to determine the CS value and the comb offset value for each port of the reference signal, so that processing complexity of the terminal can be effectively reduced. In addition, all ports in one reference signal resource using a same hopping variable of a CS value and a same hopping variable of a comb offset value can ensure that a minimum CS interval between the ports remains unchanged, thereby ensuring channel estimation performance.

In a possible implementation, the M combinations include A comb offset values and B CS values, and both A and B are positive integers. The A comb offset values are A values evenly distributed in [0, X-1], where X is a comb quantity, and the B CS values are B values evenly distributed in [0, Y-1], where Y is a maximum quantity of CSs.

Optionally, values of A and B are related to a comb quantity of the reference signal resource and a combination quantity M. Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

That the A comb offset values are evenly distributed is equivalent to that intervals between every two of the A comb offset values are the same. That the B CS values are evenly distributed is equivalent to that intervals between every two of the B CS values are the same. In other words, CS values and comb offset values in the M combinations have a specific rule. In this case, the terminal device may determine the target CS value and the target comb offset value according to the rule. A manner of notifying the M combinations is simple, and notification overheads can be reduced.

In a possible implementation, the indication information is information indicating a value of M.

When the CS values and the comb offset values in the M combinations have a specific rule, according to the rule, the value of M is indicated, so that the terminal device can determine the target CS value and the target comb offset value.

In a possible implementation, that the terminal device determines, based on the indication information, the first pseudo-random sequence, and the first time unit, the target CS value and the target comb offset value that correspond to the reference signal in the first time unit includes: The terminal device determines A and B based on M, where $M=A \times B$, A is a quantity of comb offset values included in the M combinations, and B is a quantity of CS values included in the M combinations. Then, the terminal device determines, based on a CS reference value and B, the B CS values included in the M combinations, and determines, based on a comb offset reference value and A, the A comb offset values included in the M combinations. Then, the terminal device generates a first random number based on the first pseudo-random sequence and the first time unit, and determines the target CS value and the target comb offset value from the M combinations based on the first random number.

Based on a rule of the CS value and the comb offset value in the M combinations, the terminal device may determine the target CS value and the target comb offset value from the M combinations based on M and the first random number. This is simple.

In a possible implementation, that the terminal device determines A and B based on M includes:
The terminal device determines that M=B, and each of the A comb offset values may respectively correspond to B/A CS values in the B CS values. Alternatively, the terminal device determines that M=A*B, and each of the A comb offset values corresponds to the B CS values.

According to a second aspect, an embodiment of this application provides a second communication method. The method may be performed by a second communication apparatus. The second communication apparatus may be a communication device or a communication apparatus, for example, a chip system, that can support a communication device in implementing a function needed by the method. The second communication apparatus may be one of two communication ends. For example, the two communication ends include a network device and a terminal device. The second communication apparatus may be the network device, or a unit, a function module, or the like inside the network device. For example, the second communication apparatus may be a chip disposed in the network device, or the first communication apparatus is another component configured to implement a function of the network device. The following describes the method provided in the second aspect by using an example in which the second communication apparatus is the network device.

The communication method includes: The network device sends indication information, where the indication information indicates M combinations, and each combination includes one CS value and one comb offset value; or each combination includes a hopping value of one CS value and a hopping value of one comb offset value, where M is a positive integer. The network device determines, based on the M combinations, a first pseudo-random sequence, and a first time unit, a target CS value and a target comb offset value that correspond to a reference signal in the first time unit. Then, the terminal device receives the reference signal in the first time unit based on the target CS value and the target comb offset value.

Optionally, the M combinations correspond to one reference signal resource, and the reference signal resource includes N reference signal ports.

Optionally, the N reference signal ports all correspond to the M combinations.

Optionally, that each of the M combinations includes N CS values and N comb offset values is equivalent to that a set of comb offset values corresponding to each of every N CS values or a set of CS values corresponding to every N comb offset values is specified in the M combinations. Similarly, that each combination includes hopping values of N CS values and hopping values of N comb offset values is equivalent to that hopping values of comb offset values corresponding to the hopping values of the N CS values or hopping values of CS values corresponding to the hopping values of the N comb offset values are specified in each combination.

In a possible implementation, that the network device determines, based on the M combinations, the first pseudo-random sequence, and the first time unit, the target CS value and the target comb offset value that correspond to the reference signal includes: The network device generates a first random number based on the first pseudo-random sequence and the first time unit, determines a first combination from the M combinations based on the first random number, and then, determines the target CS value and the target comb offset value based on the first combination.

In a possible implementation, a quantity of comb offset values included in the M combinations is greater than or equal to a quantity of comb offset values occupied by the reference signal, and a quantity of CS values included in the M combinations is greater than or equal to a quantity of CS values occupied by the reference signal.

In a possible implementation, the indication information further indicates the M combinations from Q combinations, Q is a positive integer, and Q is greater than or equal to M; and a quantity of comb offset values included in the Q combinations is less than or equal to a comb quantity of the reference signal, and a quantity of CS values included in the Q combinations is less than or equal to a maximum quantity of CS values corresponding to the comb quantity of the reference signal.

Optionally, Q=A*B, and a maximum quantity of CS values corresponding to a comb quantity B configured for the reference signal resource is A.

In a possible implementation, the indication information is a bitmap (bitmap) whose length is Q, and a bit that is set to 1 in the bitmap corresponds to the M combinations.

Optionally, at least CS values or comb offset values that correspond to any two bits in the bitmap are different.

In a possible implementation, determining the first combination from the M combinations based on the first random number includes: determining, based on the first random number, a first bit from the bit that is set to 1 in the bitmap and determining a combination corresponding to the first bit as the first combination.

In a possible implementation, each combination includes a hopping value of one CS value and a hopping value of one comb offset value, and that the network device determines the target CS value and the target comb offset value based on the first combination includes: For a first port in at least one port of the reference signal, the network device determines the target CS value of the first port based on a CS reference value, a CS value in the first combination, and an index of the first port, and determines the target comb offset value of the first port based on a comb offset reference value, a comb offset value in the first combination, and the index of the first port.

In a possible implementation, each combination includes one CS value and one comb offset value, and that the network device determines the target CS value and the target comb offset value based on the first combination includes: For a first port in at least one port of the reference signal, the network device determines the target CS value of the first port based on a CS value in the first combination and an index of the first port, and determines the target comb offset value of the first port based on a comb offset value in the first combination and the index of the first port.

In a possible implementation, the M combinations include A comb offset values, the M combinations include B CS values, and both A and B are positive integers. The A comb offset values are A values evenly distributed in [0, X-1], where X is a comb quantity, and the B CS values are B values evenly distributed in [0, Y-1], where Y is a maximum quantity of CSs.

Optionally, values of A and B are related to a comb quantity of the reference signal resource and a combination quantity M. Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

In a possible implementation, the indication information is information indicating a value of M.

In a possible implementation, that the network device determines, based on the indication information, the first pseudo-random sequence, and the first time unit, the target CS value and the target comb offset value that correspond to the reference signal in the first time unit includes: The network device determines A and B based on M, where M=A×B, A is a quantity of comb offset values included in the M combinations, and B is a quantity of CS values included in the M combinations. Then, the network device determines, based on a CS reference value and B, the B CS values included in the M combinations, and determines, based on a comb offset reference value and A, the A comb offset values included in the M combinations. Then, the network device generates a first random number based on the first pseudo-random sequence and the first time unit, and determines the target CS value and the target comb offset value from the M combinations based on the first random number.

In a possible implementation, that the network device determines A and B based on M includes: The network device determines that M=B, and each of the A comb offset values may respectively correspond to B/A CS values in the B CS values. Alternatively, the network device determines that M=A*B, and each of the A comb offset values corresponds to the B CS values.

For beneficial effect of the second aspect and the implementations of the second aspect, refer to the descriptions of beneficial effect of the first aspect and the implementations of the first aspect. Details are not described herein again.

According to a third aspect, an embodiment of this application provides a third communication method. The method may be performed by a first communication apparatus. The first communication apparatus may be a communication device or a communication apparatus, for example, a chip system, that can support the communication device in implementing a function needed by the method. The first communication apparatus may be one of two communication ends. For example, the two communication ends include a network device and a terminal device. The first communication apparatus may be the terminal device, or a unit, a function module, or the like inside the terminal device. For example, the first communication apparatus may be a chip disposed in the terminal device, or the first communication apparatus is another component configured to implement a function of the terminal apparatus. The following describes the method provided in the third aspect by using an example in which the first communication apparatus is the terminal device.

The communication method includes: The terminal device receives indication information, where the indication information indicates M, and M is a positive integer. Then, the terminal device determines, based on M, a first pseudo-random sequence, and a first time unit, a target CS value and a target comb offset value that correspond to a reference signal in the first time unit. Then, the terminal device sends the reference signal in the first time unit based on the target CS value and the target comb offset value.

An available comb offset value may be specified for one CS value, or an available CS value may be specified for one comb offset value. An available comb offset value corresponding to one CS value may be a part of all comb offset values. Similarly, an available CS value corresponding to one comb offset value may also be a part of all CS values. One CS value and a comb offset value corresponding to the CS value may be considered as a combination, and there are a plurality of combinations. M is a quantity of the plurality of combinations. In the method, M is indicated, so that the terminal device can determine the target CS value from the available CS value, and determine the target comb offset value from the available comb offset value, instead of using any CS value and any comb offset value. This can avoid a conflict between CS values or comb offset values used by different terminal devices, to maximize randomization of interference between reference signals of any two terminal devices in a cell.

In a possible implementation, comb offset values available to the terminal device include A comb offset values, CS values available to the terminal device include B CS values, and both A and B are positive integers. The A comb offset values are A values evenly distributed in [0, X-1], where X is a comb quantity, and the B CS values are B values evenly distributed in [0, Y-1], where Y is a maximum quantity of CSs. Alternatively, a difference between any two adjacent comb offset values in the A comb offset values is a first value, and any two adjacent CS values in the B CS values are second values. Alternatively, the A comb offset values are sorted at equal intervals, and the B CS values are sorted at equal intervals. In this method, the available CS values and the available comb offset values have a specific rule. In this case, the terminal device may determine the target CS value and the target comb offset value according to the rule. This is simple.

Optionally, values of A and B are related to a comb quantity of the reference signal resource and a combination quantity M.

Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

In a possible implementation, that the terminal device determines, based on M, the first pseudo-random sequence, and the first time unit, the target CS value and the target comb offset value that correspond to the reference signal in the first time unit includes: The terminal device determines A and B based on M, where $M=A \times B$, A is a quantity of available comb offset values, and B is a quantity of available CS values. Then, the terminal device determines, based on a CS reference value and B, the B available CS values, and determines, based on a comb offset reference value and A, the A available comb offset values. Then, the terminal device generates a first random number based on the first pseudo-random sequence and the first time unit, and determines the target CS value and the target comb offset value from the A available comb offset values and the B available CS values based on the first random number.

In a possible implementation, that the terminal device determines A and B based on M includes:

The terminal device determines that M=B, and each of the A available comb offset values may respectively correspond to B/A CS values in the B CS values. Alternatively, the terminal device determines that M=A*B, and each of the A available comb offset values corresponds to the B CS values.

According to a fourth aspect, an embodiment of this application provides a fourth communication method. The method may be performed by a second communication apparatus. The second communication apparatus may be a communication device or a communication apparatus, for example, a chip system, that can support a communication device in implementing a function needed by the method. The second communication apparatus may be one of two communication ends. For example, the two communication ends include a network device and a terminal device. The second communication apparatus may be the network device, or a unit, a function module, or the like inside the network device. For example, the second communication apparatus may be a chip disposed in the network device, or the first communication apparatus is another component configured to implement a function of the network device. The following describes the method provided in the fourth aspect by using an example in which the second communication apparatus is the network device.

The communication method includes: The network device receives indication information, where the indication information indicates M, and M is a positive integer. Then, the network device determines, based on M, a first pseudo-random sequence, and a first time unit, a target CS value and a target comb offset value that correspond to a reference signal in the first time unit. Then, the network device sends the reference signal in the first time unit based on the target CS value and the target comb offset value.

In a possible implementation, comb offset values available to the network device include A comb offset values, CS values available to the network device include B CS values, and both A and B are positive integers. The A comb offset values are A values evenly distributed in [0, X-1], where X is a comb quantity, and the B CS values are B values evenly distributed in [0, Y-1], where Y is a maximum quantity of CSs. Alternatively, a difference between any two adjacent comb offset values in the A comb offset values is a first value, and any two adjacent CS values in the B CS values are second values. Alternatively, the A comb offset values are sorted at equal intervals, and the B CS values are sorted at equal intervals.

Optionally, values of A and B are related to a comb quantity of the reference signal resource and a combination quantity M.

Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

In a possible implementation, that the network device determines, based on M, the first pseudo-random sequence, and the first time unit, the target CS value and the target comb offset value that correspond to the reference signal in the first time unit includes: The network device determines A and B based on M, where $M=A \times B$, A is a quantity of available comb offset values, and B is a quantity of available CS values. Then, the network device determines, based on a CS reference value and B, the B available CS values, and determines, based on a comb offset reference value and A, the A available comb offset values. Then, the network device generates a first random number based on the first pseudo-random sequence and the first time unit, and determines the target CS value and the target comb offset value from the A available comb offset values and the B available CS values based on the first random number.

In a possible implementation, that the network device determines A and B based on M includes:
The network device determines that M=B, and each of the A available comb offset values may respectively correspond to B/A CS values in the B CS values. Alternatively, the network device determines that M=A*B, and each of the A available comb offset values corresponds to the B CS values.

For beneficial effect of the fourth aspect and the implementations of the fourth aspect, refer to the descriptions of beneficial effect of the third aspect and the implementations of the third aspect. Details are not described herein again.

According to a fifth aspect, an embodiment of this application provides a fifth communication method. The method may be performed by two communication ends. The two communication ends may be a transmit end and a receive end, or may be a transmit end and an internal unit of a receive end, or may be an internal unit of a transmit end and a receive end, or may be an internal unit of a transmit end and an internal unit of a receive end. The internal unit of the transmit end may be a chip or a function module disposed at the transmit end. The internal unit of the receive end may be a chip or a function module disposed at the receive end. For ease of description, the following describes the method provided in the fifth aspect by using an example in which the transmit end is a network device and the receive end is a terminal device.

The communication method includes: The network device sends indication information, and the terminal device receives the indication information, where the indication information indicates M combinations, and each combination includes one CS value and one comb offset value; or each combination includes a hopping value of one CS value and a hopping value of one comb offset value, where M is a positive integer. The network device determines, based on the M combinations, a first pseudo-random sequence, and a first time unit, a target CS value and a target comb offset value that correspond to a reference signal in the first time unit. The terminal device determines, based on the indication information, the first pseudo-random sequence, and the first time unit, the target CS value and the target comb offset value that correspond to the reference signal in the first time unit. The terminal device sends the reference signal in the first time unit based on the target CS value and the target comb offset value, and the network device receives the reference signal in the first time unit based on the target CS value and the target comb offset value.

According to a sixth aspect, an embodiment of this application provides a sixth communication method. The method may be performed by two communication ends. The two communication ends may be a transmit end and a receive end, or may be a transmit end and an internal unit of a receive end, or may be an internal unit of a transmit end and a receive end, or may be an internal unit of a transmit end and an internal unit of a receive end. The internal unit of the transmit end may be a chip or a function module disposed at the transmit end. The internal unit of the receive end may be a chip or a function module disposed at the receive end. For ease of description, the following describes the method provided in the sixth aspect by using an example in which the transmit end is a network device and the receive end is a terminal device.

The communication method includes: The network device sends indication information, and the terminal device receives the indication information, where the indication information indicates M, and M is a positive integer. The network device and the terminal device respectively determine, based on M, a first pseudo-random sequence, and a first time unit, a target CS value and a target comb offset value that correspond to a reference signal in the first time unit. The terminal device sends the reference signal in the first time unit based on the target CS value and the target comb offset value, and the network device receives the reference signal in the first time unit based on the target CS value and the target comb offset value.

According to a seventh aspect, an embodiment of this application provides a communication apparatus. The communication apparatus has a function of implementing a behavior in the method example in any one of the first aspect to the fourth aspect. For beneficial effect, refer to descriptions of the first aspect to the fourth aspect. Details are not described herein again. The communication apparatus may be the first communication apparatus in the first aspect or the third aspect. For example, the communication apparatus may be a terminal device. Alternatively, the communication apparatus may be an apparatus that can support the terminal device in the first aspect or the third aspect in implementing a function required by the method provided in the first aspect or the third aspect. For example, the communication apparatus may be a chip or a chip system in the terminal device. Alternatively, the communication apparatus may be the second communication apparatus in the second aspect or the fourth aspect. For example, the communication apparatus may be a network device. Alternatively, the communication apparatus may be an apparatus that can support the network device in the second aspect or the fourth aspect in implementing a function required by the method provided in the second aspect or the fourth aspect. For example, the communication apparatus may be a chip or a chip system in the network device.

In a possible design, the communication apparatus includes a corresponding means (means) or module configured to perform the method according to any one of the first aspect to the fourth aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same function unit, the function unit is referred to as a transceiver unit, and the function unit can implement the sending function and the receiving function. Alternatively, the sending unit and the receiving unit may be different function units, and the transceiver unit is a general term for these function units. These units (modules) may perform corresponding functions in the method example according to any one of the first aspect to the fourth aspect. For details, refer to the detailed descriptions in the method example. Details are not described herein.

According to an eighth aspect, an embodiment of this application provides a communication apparatus. The communication apparatus may be the communication apparatus in the seventh aspect of the foregoing embodiments, or may be a chip or a chip system disposed in the communication apparatus in the seventh aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the network device or the terminal device in the method embodiments. For example, the communication apparatus may be a network device or a function module in a network device, for example, a baseband chip and a radio frequency chip. For another example, the communication apparatus may be a terminal device or a function module in a terminal device, for example, a baseband chip and a radio frequency chip.

According to a ninth aspect, an embodiment of this application provides a chip system. The chip system includes a processor, may further include a memory and/or a communication interface, and is configured to implement the method according to any one of the first aspect to the fourth aspect. Optionally, the chip system further includes the memory. The memory is configured to store a computer program (which may also be referred to as code or instructions). The processor is configured to invoke the computer program from the memory and run the computer program, to enable a device on which the chip system is mounted to perform the method according to any one of the first aspect to the fourth aspect and the possible implementations of the first aspect to the fourth aspect. The chip system may include a chip, or may include a chip and another discrete component.

According to a tenth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the fourth aspect.

In a specific implementation process, the communication apparatus may be a chip, the input circuit may be an input pin, the output circuit may be an output pin, and the logic circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal like a smartphone, or may be a radio access network device like a base station. The interface circuit may be a radio frequency processing chip in the wireless communication device, and the processing circuit may be a baseband processing chip in the wireless communication device.

According to an eleventh aspect, an embodiment of this application provides a communication system. The communication system includes the communication apparatus in the seventh aspect configured to implement the function in the first aspect and the communication apparatus in the seventh aspect configured to implement the function in the second aspect. Alternatively, the communication system includes the communication apparatus in the seventh aspect configured to implement the function in the third aspect and the communication apparatus in the seventh aspect configured to implement the function in the fourth aspect.

According to a twelfth aspect, this application provides a computer-readable storage medium. The computer-readable storage medium stores a computer program. When the computer program is run, the method according to any one of the first aspect to the fourth aspect is implemented.

According to a thirteenth aspect, a computer program product is provided. The computer program product includes computer program code. When the computer program code is run, the method according to any one of the first aspect to the fourth aspect is performed.

For beneficial effect of the seventh aspect to the thirteenth aspect and the implementations of the seventh aspect to the thirteenth aspect, refer to the descriptions of the first aspect to the fourth aspect or the beneficial effect of the first aspect to the fourth aspect and the implementations of the first aspect to the fourth aspect.

BRIEF DESCRIPTION OF DRAWINGS

FIG. 1 is a diagram of an example structure of a communication system to which an embodiment of this application is applicable;
FIG. 2 is a diagram of SRS frequency-domain resources (whose comb quantities are 2, 4, or 8) according to an embodiment of this application;
FIG. 3 is a diagram of a scanning bandwidth and a frequency hopping bandwidth according to an embodiment of this application;
FIG. 4 is a diagram of possible values of a CS and a comb offset according to an embodiment of this application;
FIG. 5 is a schematic flowchart of a communication method according to an embodiment of this application;
FIG. 6 is a diagram of available CSs and available comb offsets (ports 4 and 8) according to an embodiment of this application;
FIG. 7 is a diagram of M combinations of each of three terminal apparatuses configured by a network apparatus according to an embodiment of this application;
FIG. 8 is a diagram of a structure of a communication apparatus according to an embodiment of this application; and
FIG. 9 is a diagram of another structure of a communication apparatus according to an embodiment of this application.

DESCRIPTION OF EMBODIMENTS

The technical solutions provided in embodiments of this application may be applied to a fifth generation (the fifth generation, 5G) mobile communication system, or may be applied to a long term evolution (long term evolution, LTE) system, or may be applied to a next-generation mobile communication system, for example, a 6G mobile communication system or another similar communication system. Other similar communication systems include, for example, a vehicle to everything (vehicle to everything, V2X) system, an internet of things (internet of things, IoT) system, and a narrowband internet of things (narrowband internet of things, NB-IoT) system. The IoT may be understood as a wireless fidelity (wireless fidelity, Wi-Fi)-based IoT or a wearable Wi-Fi network. The wearable Wi-Fi network is a Wi-Fi network that includes a terminal device (for example, a mobile phone) as a virtual access point and an associated wearable device. In embodiments of this application, the 5G mobile communication system is used as an example for description. When the technical solutions in embodiments of this application are applied to another communication system, a device, a component, a module, and the like in embodiments may be replaced with a corresponding device, component, and module in the another communication system. This is not limited.

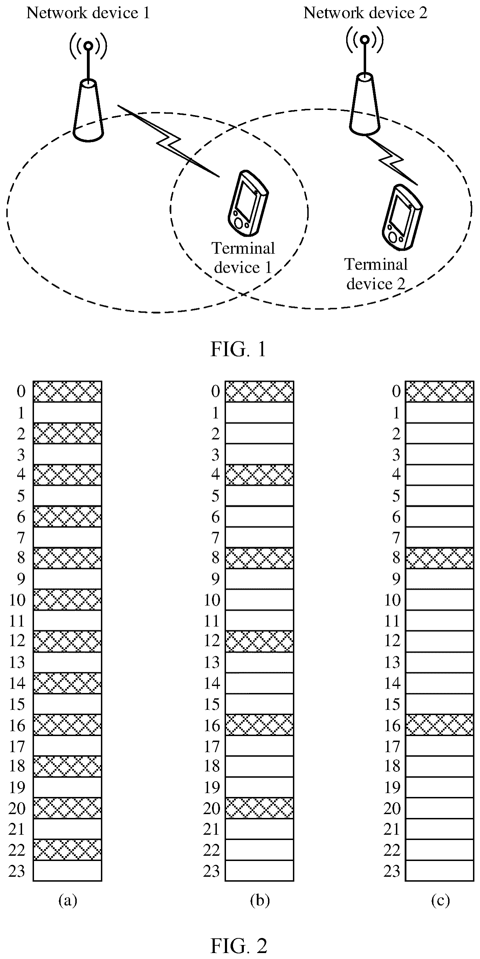

FIG. 1 shows a communication system to which an embodiment of this application is applicable. The communication system may include at least one network device and at least one terminal device. In FIG. 1, for example, the at least one network device is two network devices (namely, a network device 1 and a network device 2), and the at least one terminal device is two terminal devices (namely, a terminal device 1 and a terminal device 2). A network architecture shown in FIG. 1 is merely an example. For example, the network architecture may further include a core network. A terminal device in an area covered by the network device may communicate with the network device. For example, the terminal device 1 may communicate with the network device, and may also communicate with the network device 2. The terminal device 2 may communicate with the network device 1.
The terminal device is also referred to as a terminal, and includes user equipment (user equipment, UE), an access station, a UE station, a remote station, a wireless communication device, a user apparatus, a chip, or the like. The terminal device is configured to connect a person, an object, a machine, and the like, and may be widely used in various scenarios, for example, including but not limited to the following scenarios: cellular communication, device-to-device (device-to-device, D2D) communication, V2X, machine-to-machine/machine-type communication (machine-to-machine/machine-type communication, M2M/MTC), an IoT, virtual reality (virtual reality, VR), augmented reality (augmented reality, AR), industrial control (industrial control), self driving (self driving), telemedicine (remote medical), a smart grid (smart grid), smart furniture, a smart office, a smart wearable, smart transportation, a smart city (smart city), an unmanned aerial vehicle, and a robot. Neither of a specific technology and a specific device form used by the terminal device is limited in this embodiment of this application.
For example, the terminal device in this embodiment of this application may be a mobile phone, a tablet computer, a computer with a wireless transceiver function, a VR terminal, an AR terminal, a wireless terminal in industrial control, a vehicle, a wireless communication module in a vehicle, a vehicle-mounted T-box (Telematics BOX), an RSU, and a wireless terminal in self driving. If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs). The terminal device in this application may be a vehicle-mounted module, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is built in the vehicle.

In this embodiment of this application, the terminal device is an apparatus that may be configured to implement a function of the terminal device, or an apparatus that can support the terminal device in implementing the function, for example, a chip system, where the apparatus may be mounted in the terminal device. For example, the terminal device may alternatively be a vehicle detector. The chip system may include a chip, or may include a chip and another discrete component. The technical solutions provided in this embodiment of this application are described by using an example in which the apparatus configured to implement the function of the terminal device is the terminal apparatus.

The network device may be configured to provide a network access function for the terminal device. The network device in this embodiment of this application may be a base station (base station), an evolved NodeB (evolved nodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or all functions of a physical layer. For specific descriptions of the foregoing protocol layers, refer to related technical specifications in 3GPP. The access network device may be a macro base station, may be a micro base station or an indoor base station, or may be a relay node, a donor node, or the like. Neither of a specific technology and a specific device form used by the network device is limited in this embodiment of this application. For ease of description, an example in which the network device is a base station is used below.

It should be noted that the foregoing division of the protocol layers of the CU and the DU included in the base station is merely an example, and division may alternatively be performed at another protocol layer. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In this network architecture, signaling generated by the CU may be sent to the terminal device via the DU, or signaling generated by UE may be sent to the CU via the DU. The DU may transparently transmit the signaling to the terminal device or the CU by directly encapsulating the signaling at a protocol layer without parsing the signaling. In this network architecture, the CU is classified into a network device on a RAN side.

In embodiments of this application, the network device is an apparatus that may be configured to implement a function of the network device, or an apparatus that can support the network device in implementing the function, for example, a chip system, where the apparatus may be mounted in the network device. The chip system may include a chip, or may include a chip and another discrete component. In embodiments of this application, the technical solutions provided in embodiments of this application are described by using an example in which the apparatus configured to implement the function of the network device is the network apparatus.

The network architecture/system and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and emergence of new service scenarios, the technical solutions provided in embodiments of this application are also applicable to similar technical problems. The apparatus in the following embodiments of this application may be located in the terminal device or the network device based on a function implemented by the apparatus. When the foregoing CU-DU structure is used, the network device may be a CU, a DU, or a RAN device including a CU and a DU.

When communicating with the network device, the terminal device may send a sounding reference signal (sounding reference signal, SRS) to the network device. The network device receives the SRS, and may obtain channel state information (channel state information, CSI) between the terminal device and the network device through measurement and estimation based on channel reciprocity.

The terminal device may send the SRS to the network device based on SRS configuration information configured by the network device. The SRS configuration information includes the following content.

(1) Resource information of the SRS: The resource information of the SRS is configured by the network device based on a higher-layer parameter. The parameter may include:

$N_{symb}^{SRS}$ , which is a total quantity of orthogonal frequency division multiplexing (orthogonal frequency division multiplexing, OFDM) symbols occupied by an SRS resource, where $N_{symb}^{SRS}$ belongs to a set {1, 2, 4, 8, 10, 12, 14}, or the quantity of OFDM symbols occupied by the SRS resource is 1, 2, 4, 8, 10, 12, or 14;

$N_{ap}^{SRS}$ , which is a quantity of antenna ports corresponding to the SRS resource, where one SRS resource includes $N_{ap}^{SRS}$ antenna ports, and $N_{ap}^{SRS}$ belongs to a set {1, 2, 4}; resources corresponding to antenna ports in one SRS resource are orthogonal to each other, for example, different antenna ports may occupy completely same symbols, and are multiplexed through frequency division (by occupying different subcarriers) or code division (by using different sequences or different cyclic shifts of a same sequence); an antenna port in the SRS resource is also referred to as an SRS port; and an SRS port number/sequence number/index is $\{p_i\}_{i=0}^{N_{ap}^{SRS}-1}$ , and $p_i$ = 1000 + $i$; and

a comb quantity $K_{TC}$, which indicates frequency-domain resources of the SRS and is specified based on a higher-layer parameter transmissionComb, where the SRS may occupy a frequency-domain resource based on a comb structure; subcarriers of the frequency-domain resource of the comb structure are distributed at equal intervals; $K_{TC}$ may indicate a quantity of subcarriers between two adjacent subcarriers that carry the SRS, or a frequency resource of the SRS appears at an interval of $K_{TC}$ subcarriers; and FIG. 2 is a diagram of SRS frequency-domain resources when $K_{TC}$=2, 4, 8, and shaded parts in FIG. 2 are frequency-domain resources of the SRS, where in a comb structure (a), $K_{TC}$=2; in a comb structure (b), $K_{TC}$=4; and in a comb structure (c), $K_{TC}$=8.

(2) Frequency-domain resource of the SRS port $p_i$: The frequency-domain resource includes a frequency-domain start location of the SRS port $p_i$ and a comb occupied by the SRS port $p_i$. The terminal device may transmit the SRS in a frequency hopping manner based on a frequency hopping parameter. The frequency hopping parameter of the SRS includes a scanning bandwidth of the SRS, a frequency hopping bandwidth of the SRS, and a frequency hopping periodicity of the SRS. The following sequentially describes the frequency hopping parameter of the SRS, the frequency-domain start location of the SRS port $p_i$, and the comb occupied by the SRS port $p_i$.

(21) Frequency hopping parameter of the SRS:

When the network device does not configure a frequency scaling factor $P_F$, the scanning bandwidth of the SRS is a bandwidth range corresponding to a channel obtained by the network device based on the SRS. The frequency hopping bandwidth of the SRS is a bandwidth range corresponding to a channel obtained by the network device after the SRS is sent once, and the frequency hopping bandwidth is less than or equal to the scanning bandwidth. The frequency hopping periodicity of the SRS is a quantity of SRS sending times required by the network device to obtain the channel corresponding to the scanning bandwidth. When the network device configures the frequency scaling factor $P_F$ based on the higher-layer parameter, the scanning bandwidth of the SRS, the frequency hopping bandwidth of the SRS, and the frequency hopping periodicity of the SRS remain unchanged.

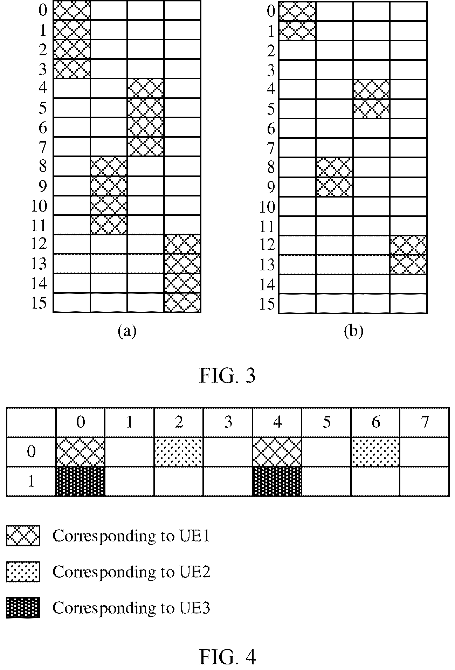

When the bandwidth for sending the SRS once changes to $1/P_F$ of the original bandwidth, the scanning bandwidth of the SRS is $P_F$ times the bandwidth range corresponding to the channel obtained by the network device based on the SRS, and the frequency hopping bandwidth of the SRS is $P_F$ times the bandwidth range corresponding to the channel obtained by the network device after the SRS is sent once. For example, FIG. 3 shows an example of a scanning bandwidth and a frequency hopping bandwidth. A small grid in FIG. 3 is a resource block (resource block, RB). The scanning bandwidth of the SRS is 16 RBs, the frequency hopping bandwidth is 4 RBs, and the frequency hopping periodicity is 4. In (a) in FIG. 3, $P_F$ is not configured, and in (a) in FIG. 3, $P_F$ = 2 is configured.

(22) The frequency-domain start location $k_0^{(p_i)}$ of the SRS port $p_i$ satisfies the following:

$$k_0^{(p_i)} = \bar{k}_0^{(p_i)} + n_{offset}^{FH} + n_{offset}^{RPFS}$$

$$\bar{k}_0^{(p_i)} = n_{shift}N_{sc}^{RB} + \left(k_{TC}^{(p_i)} + k_{offset}^{l'}\right) \bmod K_{TC}$$

$$n_{\text{offset}}^{\text{FH}} = \sum_{b=0}^{B_{\text{SRS}}} m_{\text{SRS,b}} N_{\text{sc}}^{\text{RB}} n_b$$

$$n_{\text{offset}}^{\text{RPFS}} = N_{\text{sc}}^{\text{RB}} m_{\text{SRS,B}_{\text{SRS}}} \left( \left( k_F + k_{\text{hop}} \right) \bmod P_F \right) / P_F$$

For the frequency hopping offset $n_{\text{offset}}^{\text{FH}}$, $n_{\text{shift}}$, and $k_{\text{offset}}^{l'}$, refer to the 3GPP protocol. Details are not described herein. $m_{\text{SRS,B}_{\text{SRS}}}$ is an SRS frequency hopping bandwidth determined based on higher-layer parameters $B_{\text{SRS}}$ and $C_{\text{SRS}}$ and a protocol-predefined table, and $k_F \in \{0,1, ..., P_F - 1\}$ is a part of SRS start location indexes, and is semi-statically configured by the network device based on a higher-layer parameter startRBIndexFScaling-r17. The start RB hopping offset $k_{\text{hop}}$ is determined according to the following formula and Table 1:

$$\overline{k}_{\text{hop}} = \left\lfloor \frac{n_{\text{SRS}}}{\prod_{b'=b_{\text{hop}}}^{B_{\text{SRS}}} N_{b'}} \right\rfloor \bmod P_F$$

$$N_{b_{\text{hop}}} = 1$$

Table 1

| $\overline{k}_{\text{hop}}$ | $k_{\text{hop}}$ | | |
| --- | --- | --- | --- |
| | $P_F = 1$ | $P_F = 2$ | $P_F = 4$ |
| 0 | 0 | 0 | 0 |
| 1 | - | 1 | 2 |
| 2 | - | - | 1 |
| 3 | - | - | 3 |

For an SRS counter $n_{\text{SRS}}$, refer to the 3GPP protocol. Details are not described herein. $b_{\text{hop}} \in \{0,1,2,3\}$ is a start frequency hopping layer index, and $B_{\text{SRS}} \in \{0,1,2,3\}$ is an end frequency hopping layer index. $b_{\text{hop}}$ and $B_{\text{SRS}}$ determine a frequency hopping layer index range, and both are semi-statically configured by the network device based on a higher-layer parameter freqHopping. $N_b$, is a quantity of parallel branches at a $b'^{\text{th}}$ layer, and is determined based on the higher-layer parameters $B_{\text{SRS}}$ and $C_{\text{SRS}}$ and the protocol-predefined table. $\prod_{b'=b_{\text{hop}}}^{B_{\text{SRS}}} N_b$, is a quantity of SRS sending times included in one SRS frequency hopping periodicity, and $\left\lfloor \frac{n_{\text{SRS}}}{\prod_{b'=b_{\text{hop}}}^{B_{\text{SRS}}} N_{b'}} \right\rfloor$ is an index of a frequency hopping periodicity corresponding to current SRS sending.

(23) A comb $k_{\text{TC}}^{(p_i)}$ occupied by the SRS port $p_i$ satisfies the following:

$$k_{\text{TC}}^{(p_i)}$$
$$= \begin{cases} \left( \overline{k}_{\text{TC}} + K_{\text{TC}}/2 \right) \bmod K_{\text{TC}} & \text{if } N_{\text{ap}}^{\text{SRS}} = 4, \, p_i \in \{1001, 1003\}, \text{ and } n_{\text{SRS}}^{\text{cs,max}} = 6 \\ \left( \overline{k}_{\text{TC}} + K_{\text{TC}}/2 \right) \bmod K_{\text{TC}} & \text{if } N_{\text{ap}}^{\text{SRS}} = 4, \, p_i \in \{1001, 1003\}, \text{ and } n_{\text{SRS}}^{\text{cs}} \in \{ n_{\text{SRS}}^{\text{cs,max}}/2, ..., n_{\text{SRS}}^{\text{cs,max}} - 1 \} \\ \overline{k}_{\text{TC}} & \text{otherwise} \end{cases}$$

$\overline{k}_{\text{TC}} \in \{0,1, ... , K_{\text{TC}} - 1\}$ is a comb offset, and is configured by the network device based on the higher-layer parameter transmissionComb; and $N_{sc}^{RB}$ is a quantity of subcarriers included in each RB, for example, $N_{sc}^{RB}$ is 12. $n_{SRS}^{cs,max}$ is a maximum cyclic shift value, and $n_{SRS}^{cs,i}$ is a cyclic shift value corresponding to the SRS port $p_i$. A meaning of the formula is as follows: If a quantity of SRS ports is 4, and when $n_{SRS}^{cs} \in \{n_{SRS}^{cs,max}/2, \dots, n_{SRS}^{cs,max} - 1\}$ or $n_{SRS}^{cs,max} = 6$, two combs are occupied. For example, ports 1 and 3 occupy one comb, and ports 2 and 4 occupy the other comb. When a quantity of the remaining SRS ports is 4 or 2, all SRS ports occupy one comb.

(3) Sequence of the SRS: The sequence of the SRS is a CS of a base sequence.

The base sequence may be a sequence generated based on a (Zadoff-Chu, ZC) sequence, for example, the ZC sequence, or a sequence generated by extending or intercepting the ZC sequence by using a cyclic shift. For example, if a ZC sequence whose length is N is $z_q(n)$, n = 0,1, ..., N - 1, a sequence whose length is M and that is generated based on the ZC sequence may be represented as: $z_q(m \bmod N)$, m = 0,1, ..., M - 1. The ZC sequence whose length is N may be represented as:

$$z_q(n) = \begin{cases} \exp(-j\pi q \cdot \dfrac{n(n+1)}{N}), N \text{ is an odd number} \\ \exp(-j\pi q \cdot \dfrac{n^2}{N}), \ N \text{ is an even number} \end{cases}, n=0,1,2, \dots, N-1$$

Herein, N is a positive integer; and q is a root indicator of the ZC sequence, and is a positive integer that is relatively prime to N and that is less than N.

A sequence $r_{u,v}^{(\alpha,\delta)}(n)$ of the SRS and a base sequence $\bar{r}_{u,v}(n)$ may satisfy the following:

$$r_{u,v}^{(\alpha,\delta)}(n) = e^{j\alpha n}\bar{r}_{u,v}(n), \quad 0 \leq n < M_{ZC}$$

Herein, $\alpha$ is a cyclic shift, and $\alpha$ is a real number; $\delta = \log_2(K_{TC})$, and $\delta$ is an integer; u and v are indexes of a base sequence in an SRS base sequence group, and u and v are integers; j is an imaginary unit; $M_{ZC}$ is a length of the SRS sequence, and is a positive integer; n is an index of an element in the SRS sequence, n is an integer, and elements included in the sequence are sequentially mapped, in ascending order of indexes, to subcarriers that correspond to an SRS resource and whose subcarrier indexes are in ascending order.

Each SRS port may correspond to one sequence, and a cyclic shift $\alpha_i$ corresponding to the SRS port $p_i$ satisfies the following:

$$\alpha_i = 2\pi \frac{n_{SRS}^{cs,i}}{n_{SRS}^{cs,max}}$$

$$n_{SRS}^{cs,i} = \begin{cases} \left(n_{SRS}^{cs} + \dfrac{n_{SRS}^{cs,max}\lfloor(p_i - 1000)/2\rfloor}{N_{ap}^{SRS}/2}\right) \bmod n_{SRS}^{cs,max} & \text{if } N_{ap}^{SRS} = 4 \text{ and } n_{SRS}^{cs,max}=6 \\ \left(n_{SRS}^{cs} + \dfrac{n_{SRS}^{cs,max}(p_i - 1000)}{N_{ap}^{SRS}}\right) \bmod n_{SRS}^{cs,max} & \text{otherwise} \end{cases}$$

Herein, $n_{SRS}^{cs} \in \{0,1, \dots, n_{SRS}^{cs,max} - 1\}$ is a cyclic shift reference value, and is configured by the base station based on the higher-layer parameter transmissionComb. A meaning of $n_{SRS}^{cs,max}$ may be understood as that a delay domain is equally divided into $n_{SRS}^{cs,max}$ parts, or a phase value $2\pi$ is equally divided into $n_{SRS}^{cs,max}$ parts, and each cyclic shift value corresponds to a start point of each part. A relationship between values of $n_{SRS}^{cs,max}$ and $K_{TC}$ satisfies Table 2.

Table 2

| $K_{TC}$ | $n_{SRS}^{cs,max}$ |
|---|---|
| 2 | 8 |
| 4 | 12 |
| 8 | 6 |

A meaning of the cyclic shift $\alpha_i$ corresponding to the SRS port $p_i$ is: If $N_{ap}^{SRS} = 4$ and $n_{SRS}^{cs,max}=6$, equal-interval CS values corresponding to ports cannot be satisfied. In this case, two groups of ports (0&1 and 2&3) correspond to a same CS value. In other cases, ports correspond to different CS values in ascending order of IDs.

For a same base sequence, different SRS sequences may be obtained by using different cyclic shift values $\alpha$. If there are two cyclic shift values $\alpha_1$ and $\alpha_2$, when $\alpha_1$ and $\alpha_2$ satisfy $\alpha_1 \bmod 2\pi \neq \alpha_2 \bmod 2\pi$, a sequence $s_1(m)$ obtained based on the base sequence $\bar{r}_{u,v}(n)$ and $\alpha_1$ and a sequence $s_2(m)$ obtained based on the base sequence $\bar{r}_{u,v}(n)$ and $\alpha_2$ are orthogonal to each other, that is, a cross-correlation coefficient is zero. Lengths of the sequences $s_1(m)$ and $s_2(m)$ are M, m=0, 1, ..., M-1, and the cross-correlation coefficient is defined as: $\left| \frac{1}{M} \sum_{m=0}^{M-1} s_1(m) s_2^*(m) \right|$.

Because the cross-correlation coefficient is 0, SRS sequences obtained based on a same base sequence and different cyclic shift values $\alpha$ may be allocated to different terminal devices. These terminal devices may send, on a same time-frequency resource, the SRS sequences generated based on cyclic shifts of the same base sequence. When channels of the terminal devices are flat within lengths of the SRS sequences, these SRS sequences do not cause SRS interference between the terminal devices.

For different base sequences, interference between SRS sequences obtained based on a same cyclic shift value $\alpha$ or different cyclic shift values $\alpha$ is not 0. If SRS sequences obtained based on a same cyclic shift value or different cyclic shift values of different base sequences are allocated to different terminal devices, the terminal devices send, on a same time-frequency resource, the SRS sequences generated based on cyclic shifts of the different base sequences. When channels between the terminal devices and a network device are flat within lengths of the SRS sequences, these SRS sequences cause interference between the terminal devices. The example in FIG. 1 is still used. The network device 1 and the network device 2 may jointly transmit data to a terminal device. The network device 1 configures, for the terminal device 1, a sequence and a resource for sending an SRS, and the network device 2 configures, for the terminal device 2, a sequence and a resource for sending an SRS. The resource that is configured by the network device 1 for the terminal device 1 and that is used to send the SRS may be the same as the resource that is configured by the network device 2 for the terminal device 2 and that is used to send the SRS, and a base sequence that is configured by the network device 1 for the terminal device 1 and that is used to send the SRS is different from a base sequence that is configured by the network device 2 for the terminal device 2 and that is used to send the SRS. In this case, the terminal device 1 and the terminal device 2 send SRS sequences on a same resource based on different base sequences. Due to interference between the SRS sequences, the network device 1 cannot accurately obtain a channel estimation result of the terminal device 1, and the network device 2 cannot accurately obtain a channel estimation result of the terminal device 2.

For example, two cells respectively correspond to two base sequences, there are two terminal devices in each cell, and the two terminal devices in each cell use two different cyclic shift values of a same base sequence. In this case, four terminal devices UE1 to UE4 may send SRSs on a same time-frequency resource.

Table 3

| UE1: | $s_1, \alpha_1$ | UE2: | $s_2, \alpha_2$ |
|---|---|---|---|
| UE3: | $s_1, \alpha_3$ | UE4: | $s_2, \alpha_4$ |

As shown in Table 3, two base sequences respectively corresponding to the two cells are a base sequence $s_1$ and a base sequence $s_2$. In an SRS sending periodicity, UE1 and UE2 perform channel estimation by using two different cyclic shifts $\alpha_1$ and $\alpha_2$ of the base sequence $s_1$, and UE3 and UE4 perform channel estimation by using two different cyclic shifts $\alpha_3$ and $\alpha_4$ of the base sequence $s_2$. It is assumed that channels of the four terminal devices on M subcarriers of an SRS sequence are flat and are respectively $h_1$, $h_2$, $h_3$, and $h_4$. On a $k^{th}$ subcarrier of the M subcarriers occupied by the SRS sequence, a signal y(k) received by the network device is:

$$y(k) = h_1 s_1(k)e^{j\alpha_1 k} + h_2 s_1(k)e^{j\alpha_2 k} + h_3 s_2(k)e^{j\alpha_3 k} + h_4 s_2(k)e^{j\alpha_4 k}.$$

To estimate a channel $h_1$ of UE1, the network device performs a correlation operation on the received signal and an SRS sequence used by UE1:

$$\frac{1}{M}\sum\nolimits_{k=0}^{M-1} y(k) \times (s_1(k)e^{j\alpha_1 k})^* = h_1 + \frac{1}{M}h_3 \sum\nolimits_{k=0}^{M-1} s_2(k)s_1^*(k)e^{j(\alpha_3-\alpha_1)k} + \frac{1}{M}h_4\sum\nolimits_{k=0}^{M-1} s_2(k)s_1^*(k)e^{j(\alpha_4-\alpha_1)k}$$

Herein, $\frac{1}{M}h_3 \sum_{k=0}^{M-1} s_2(k)s_1^*(k)e^{j(\alpha_3-\alpha_1)k}$ and $\frac{1}{M}h_4 \sum_{k=0}^{M-1} s_2(k)s_1^*(k)e^{j(\alpha_4-\alpha_1)k}$ are respectively interference caused by UE3 and UE4 to channel estimation of UE1. It can be learned from interference from UE3 to UE1 and interference from UE4 to UE1 that a value of interference between SRS sequences of two terminal devices is determined by a cyclic shift difference between the two SRS sequences.

In embodiments of this application, unless otherwise specified, when a same parameter appears below, a meaning of the parameter is the same as that described above. Details are not described again.

To enable the network device to obtain a more accurate channel estimation result, interference between SRS sequences may be randomized. The following describes two manners of randomizing interference between SRSs.

In a CSH manner, CSH may be understood as that random cyclic shifts are used at different sending moments. The random cyclic shift is a cyclic shift value determined in a randomization manner. For example, random numbers generated by using a pseudo-random sequence correspond to different cyclic shifts. Because the random numbers generated based on the pseudo-random sequence are independent and have a low correlation, SRS interference can be randomized in the cyclic shift hopping manner.

In a COH manner, COH may be understood as that random comb bias values are used at different sending moments. The random comb bias value is a bias value determined in a randomization manner. For example, random numbers generated by using a pseudo-random sequence correspond to different comb bias values.

To better randomize the interference between the SRSs of the terminal devices, both the CSH and the COH may be used. The network device separately configures a CSH-related parameter and a COH-related parameter for each terminal device. The related parameter includes, for example, a CS value and a comb offset value, or a hopping value of a CS value and a hopping value of a comb offset value. However, some terminal devices do not support the CSH or the COH, and some terminal devices can support both the CSH and the COH. For ease of description, in embodiments of this application, terminal devices that do not support the CSH or the COH are collectively referred to as legacy terminal devices (legacy UEs). The legacy UE may correspond to UE that supports only an old protocol version, or may be UE that supports a new protocol version but does not support the COH and/or the CSH. The UE supporting the old protocol version herein may be understood as UE that does not support the COH/CSH, or UE that supports a version earlier than a version of the COH/CSH. Because the legacy UE does not support the CSH or the COH, if each terminal device uses the CSH and the COH by default, a resource conflict between the terminal devices may be caused. Consequently, the CSH or the COH cannot be implemented, and randomization of SRS interference between the terminal devices cannot be maximized.

For example, FIG. 4 shows possible values of a CS and a comb offset. In FIG. 4, 0 to 7 correspond to CS values, and 0 and 1 correspond to comb offset values. In FIG. 4, an example in which three UEs (namely, UE1 to UE3) send SRSs is used, and UE3 is legacy UE. Two ports of UE1 occupy comb offset 0, CS0, and CS4, two ports of UE2 occupy comb offset 0, CS2, and CS6, and two ports of UE3 occupy comb offset 1, CS0, and CS4. At the comb offset 1, there is an SRS of UE3 that occupies a same CS value as that occupied by an SRS of UE1. Therefore, COH cannot be performed on an SRS port of the UE1; otherwise, a resource occupied by UE1 conflicts with a resource occupied by UE3. UE1 performs only CSH and does not perform COH. Therefore, randomization of SRS interference between UE1 and UE3 are not maximized. For UE2, when the comb offset value is 1, CS0 and CS4 are occupied by the SRS of UE3. Therefore, when CSH is performed on an SRS port of UE2, a resource occupied by UE2 may conflict with a resource occupied by UE3. UE2 performs only COH and does not perform CSH. Therefore, randomization of SRS interference between UE2 and UE3 are not maximized.

To resolve the foregoing problems, the technical solutions in embodiments of this application are provided. In embodiments of this application, for any CS value, at least one available comb offset value may be (pre)configured or predefined, and the at least one available comb offset value may be a part of all comb offset values. Alternatively, for any comb offset value, at least one available CS value may be (pre)configured or predefined, and the at least one available CS value may be a part of all CS values. In this manner, the terminal device uses an available CS value and an available comb offset value, to avoid a conflict with a CS value and a comb offset value that are used by another terminal device, so that the terminal device can use both the CSH and the COH, to maximize randomization of SRS interference between terminal devices.

The example in FIG. 1 is still used. UE1 is used as an example. Available comb offset values corresponding to CS0 and CS4 are comb offset 0, or hopping values of available comb offset values corresponding to CS0 and CS4 belong to a set {0}. Available comb offset values corresponding to CS1, CS2, CS3, CS5, and CS7 are comb offset 0 and comb offset 1, or hopping values of the available comb offset values corresponding to CS1, CS2, CS3, CS5, and CS7 belong to a set {0, 1}. When the CS value used by UE1 is CS0 or CS4, the comb offset value is comb offset 0, and UE1 performs both COH and CSH, which does not cause a conflict with the CS value and comb offset value used by UE3. Therefore, randomization of SRS interference between UE1 and UE3 can be maximized.

In embodiments of this application, the comb offset value, the comb offset, and the comb bias may be interchangeable. The hopping value of the comb offset value may also be referred to as a hop value of the comb offset value. The hopping value of the CS value may also be referred to as a hop value of the CS value. A reference value of the CS value is also referred to as an initial CS value, and a reference value of the comb offset is also referred to as an initial comb offset. $k_{TC}^{(p_i)}$ is a comb offset occupied by the port $p_i$ of a reference signal; $n_{SRS}^{cs,i}$ is a CS value occupied by the port $p_i$ of the reference signal; $\overline{k}_{TC}$ is a reference value of the comb offset; $n_{SRS,hopping}^{cs}$ is a hopping value of the CS value; $\overline{k}_{TC,hopping}$ is a hopping value of the comb offset; $K_{TC}$ is a comb quantity of the reference signal; and $n_{SRS}^{cs,max}$ is a maximum quantity of CS values corresponding to the comb of the reference signal.

In embodiments of this application, a CS value and a comb value that are included in each of M combinations are an absolute value of an available CS value and an absolute value of an available comb value. The absolute value of the CS value is a sum of a reference value of the CS value and a hopping value of the CS value, and the absolute value of the comb offset value is a sum of a reference value of the comb offset value and a hopping value of the comb offset value. A CS value included in one combination is "$'n_{SRS,HOPPING}^{cs}$" in embodiments of this application, and a comb offset value included in one combination is "$\overline{k}_{TC,HOPPING}$" in embodiments of this application. Unless otherwise specified, the CS value mentioned in embodiments of this application is an absolute value of the CS value, and the comb offset value is an absolute value of the comb offset value. A target CS value is a CS value used to generate a reference signal sequence, and a target comb offset value is an offset value for determining a comb occupied by the reference signal.

In embodiments of this application, unless otherwise specified, when a same parameter appears below, a meaning of the parameter is the same as that described above. Details are not described again.

The reference signal in embodiments of this application may be an SRS, or may be a demodulation reference signal (demodulation reference signal, DMRS), a phase tracking signal, or the like. A sequence of the reference signal may be a bit sequence of a specific length. A terminal device may perform an operation like modulation on the sequence, to obtain a corresponding radio signal. The radio signal may be referred to as the reference signal. Therefore, in some cases, the sequence of the reference signal may be considered to be equivalent to the reference signal.

A time unit in embodiments of this application may be a symbol, a slot (slot), a mini-slot (mini-slot), a subframe, a frame, a half-subframe, a half-frame, or the like.

The following describes in detail the solutions provided in embodiments of this application with reference to the accompanying drawings and specific embodiments.

The communication method provided in embodiments of this application relates to interaction between two communication apparatuses. The two communication apparatuses are, for example, a first communication apparatus and a second communication apparatus. For example, the first communication apparatus is a network apparatus, and the second communication apparatus is a terminal apparatus. Steps performed by the network apparatus may be implemented by the network device, or may be implemented by a component (for example, a module like a chip, a processing unit, or a processor) in the network device. For example, the network apparatus may be the network device in FIG. 1, or may be a chip (system) in the network device in FIG. 1. Steps performed by the terminal apparatus may be implemented by the terminal device, or may be implemented by a component (for example, a module like a chip, a processing unit, or a processor) in the terminal device. The terminal apparatus may be the terminal device shown in FIG. 1, or may be a chip (system) in the terminal device in FIG. 1.

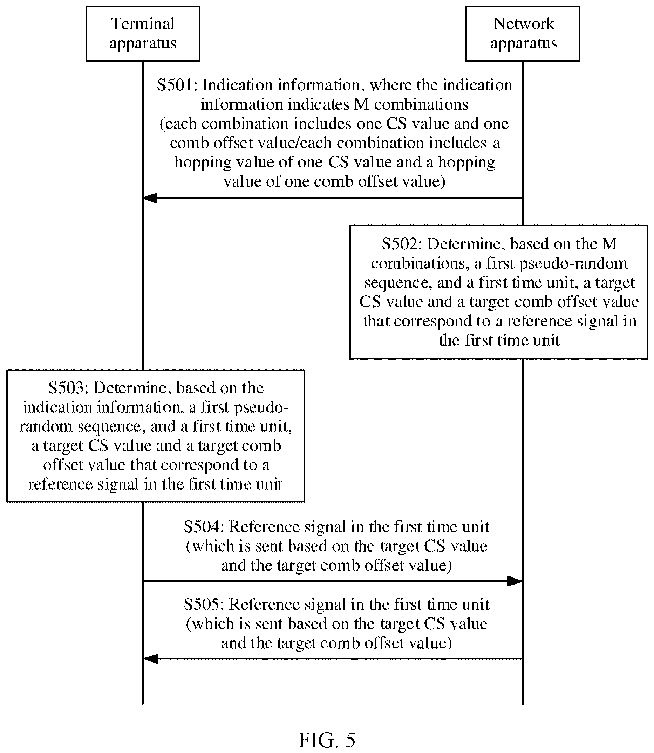

FIG. 5 is a schematic flowchart of a communication method according to an embodiment of this application. FIG. 5 describes the method from a perspective of interaction between a network apparatus and a terminal apparatus. As shown in FIG. 5, a procedure of the communication method includes the following steps.

S501: The network apparatus sends indication information to the terminal apparatus, and correspondingly, the terminal apparatus receives the indication information from the network apparatus.

The indication information may indicate at least one CS value and at least one comb offset value corresponding to each of the at least one CS value. One CS value may correspond to one or more comb offset values, and comb offset values corresponding to different CS values may be the same or may be different. At least one comb offset value corresponding to one CS value may be a part of all comb offset values (comb quantities), and the part of the comb offset values may also be considered as available comb offset values. It may be considered by default that the at least one CS value indicated by the indication information is an available CS value, and the comb offset value corresponding to each of the at least one CS value is an available comb offset value. "The indication information indicates at least one CS value and at least one comb offset value corresponding to each of the at least one CS value" may also be replaced with "the indication information indicates at least one available CS value and at least one available comb offset value corresponding to each of the at least one CS value".

Alternatively, the indication information may indicate at least one comb offset value and at least one CS value corresponding to each of the at least one comb offset value. One comb offset value may correspond to one or more CS values, and different comb offset values may correspond to a same CS offset or different CS offsets. "The indication information indicates at least one comb offset value and at least one CS value corresponding to each of the at least one comb offset value" may also be replaced with "the indication information indicates at least one available comb offset value and at least one available CS value corresponding to each of the at least one comb offset value".

If one available CS value and an available comb offset value corresponding to the CS value are considered as one combination, the indication information may indicate at least one combination. For example, the indication information indicates M combinations, where M is a positive integer. For example, each of the M combinations may include one CS value and one comb offset value.

An available CS value may be indirectly determined based on a reference value of the CS value and a hopping value of the CS value. Similarly, an available comb offset value may be determined based on a reference value of the comb offset value and a hopping value of the comb offset value. In a possible implementation, the available CS value may be indirectly indicated based on the hopping value of the CS value, and the available comb offset value may be indirectly indicated based on the hopping value of the comb offset value. For example, a hopping value of one CS value and a hopping value of one comb offset value may be considered as one combination, and the indication information may indicate M combinations. Each of the M combinations includes a hopping value of one CS value and a hopping value of one comb offset value, and may indirectly indicate the CS value and the comb offset value. The M combinations correspond to one reference signal resource, the reference signal resource includes N reference signal ports, and N is a positive integer. The N reference signal ports all correspond to the M combinations.

In embodiments of this application, each of the M combinations may include one CS value and one comb offset value, or each of the M combinations includes a hopping value of one CS value and a hopping value of one comb offset value. Alternatively, each of the M combinations includes N CS values and N comb offset values. It may also be understood that a set of comb offset values corresponding to each of every N CS values or a set of CS values corresponding to every N comb offset values is specified in the M combinations. Similarly, each of the M combinations includes hopping values of N CS values and hopping values of N comb offset values. It may also be understood that hopping values of comb offset values corresponding to the hopping values of the N CS values or hopping values of CS values corresponding to the hopping values of the N comb offset values are specified in each combination.

For specific implementations of the M combinations, the following describes possible implementations of the indication information, including but not limited to the following three cases.

**Case 1:** Each of the M combinations includes a hopping value of one CS value and a hopping value of one comb offset value.

Hopping values of CS values included in the M combinations are a part of hopping values of all CS values, and hopping values of comb offset values included in the M combinations are a part of hopping values of all comb offset values. It is assumed that in the hopping values of all CS values and the hopping values of all comb offset values, a hopping value of one CS value and a hopping value of one comb offset value form one combination, and there are a total of Q combinations, where Q is greater than or equal to M. The M combinations belong to the Q combinations, and each of the M combinations includes a hopping value of one CS value and a hopping value of one comb value.

In this case, the indication information may indicate the M combinations in the Q combinations, or the indication information may indicate the M combinations from the Q combinations. For example, the indication information may be a bitmap (bitmap) whose length is Q, one bit in the bitmap corresponds to one combination, and a bit whose value is/that is set to 1 in the bitmap may correspond to the M combinations. For example, the bitmap whose length is Q is $b_0, b_1, b_2 \ldots b_{Q-1}$, where $Q = K_{TC} \times n_{SRS}^{cs,max}$. It may be understood that a quantity of hopping values of comb offset values included in the Q combinations is less than or equal to a comb quantity (namely, $K_{TC}$) of the reference signal, and a quantity of hopping values of CS values included in the Q combinations is less than or equal to a maximum quantity of CS values (namely, $n_{SRS}^{cs,max}$) corresponding to the comb quantity of the reference signal. If the Q combinations are numbered from 0, and the M combinations are combinations numbered 2, 5, and 8 in the Q combinations, the indication information is 0,0,1,0,0,1,0,0,1,0, ... 0. At least hopping values of CS values or hopping values of comb offset values that correspond to any two bits in the bitmap whose length is Q are different.

Optionally, a quantity of hopping values of comb offset values included in the M combinations cannot be less than a quantity of comb offset values in a resource configuration of the reference signal, and a quantity of hopping values of CS values included in the M combinations cannot be less than a quantity of CSs in the resource configuration of the reference signal. Alternatively, a quantity of hopping values of comb offset values included in the M combinations is greater than or equal to a quantity of comb offset values occupied by the reference signal, and a quantity of hopping values of CS values included in the M combinations is greater than or equal to a quantity of CS values occupied by the reference signal. The quantity of hopping values of the comb offset values is a quantity of different comb offset values, and a same comb offset value is not counted. For example, there are three comb offset values: 1, 1, and 2. In this case, a quantity of the three comb offset values is 2. Similarly, the quantity of hopping values of the CS values is a quantity of different CS values. For example, it is assumed that the reference signal includes N ports, and the N ports occupy K comb offset values and P CS values. In this case, the quantity of hopping values of the comb offset values included in the M combinations is greater than or equal to K, and the quantity of hopping values of the CS offset values included in the M combinations is greater than or equal to P.

It should be noted that a quantity of combs occupied by one SRS resource is determined based on an initially configured CS value, a quantity of ports, and $K_{TC}$, and is irrelevant to a hopping value of a comb offset value and a hopping value of a CS value; or, all ports in one reference signal resource use a same hopping value of a CS value and a same hopping value of a comb offset value. In this way, a minimum CS spacing between initially configured ports can be achieved, thereby reducing or even avoiding impact of enabling of the COH and the CSH on channel estimation performance of the SRS.

**Case 2:** Each of the M combinations includes one CS value and one comb offset value.

Similar to the case 1, CS values included in the M combinations are a part of all CS values, and comb offset values included in the M combinations are a part of all comb offset values. It is assumed that in all CS values and all comb offset values, one CS value and one comb offset value form one combination, and there are a total of Q combinations, where Q is greater than or equal to M. The M combinations belong to the Q combinations, and a quantity of comb offset values included in the Q combinations is less than or equal to a comb quantity (namely, $K_{TC}$) of the reference signal. In addition, a quantity of CS values included in the Q combinations is less than or equal to a maximum quantity of CS values (namely, $n_{SRS}^{cs,max}$) corresponding to the comb quantity of the reference signal. Optionally, Q=A*B, and a maximum quantity of CS values corresponding to a comb quantity B configured for the reference signal resource is A.

In this case, the indication information may alternatively indicate the M combinations from the Q combinations. For example, the indication information may be a bitmap whose length is Q, one bit in the bitmap corresponds to one combination, and a bit whose value is/that is set to 1 in the bitmap may correspond to the M combinations. For example, the bitmap whose length is Q is $b_0, b_1, b_2 ... b_{Q-1}$, where $Q = K_{TC} \times n_{SRS}^{cs,max}$. If the Q combinations are numbered from 0, and the M combinations are combinations numbered 1, 6, and 7 in the Q combinations, the indication information is 0,1,0,0,0,0,1,1,0,0, ... 0. At least CS values or comb offset values that correspond to any two bits in the bitmap whose length is Q are different.

A quantity of available resources indicated by the M combinations is greater than a quantity of resources actually occupied by the reference signal resource, so that a randomization effect can be maximized as much as possible. For example, a quantity of comb offset values included in the M combinations cannot be less than a quantity of comb offset values in a resource configuration of the reference signal, and a quantity of CS values included in the M combinations cannot be less than a quantity of CSs in the resource configuration of the reference signal. In other words, the quantity of comb offset values included in the M combinations is greater than or equal to a quantity of comb offset values occupied by the reference signal, and the quantity of CS values included in the M combinations is greater than or equal to a quantity of CS values occupied by the reference signal. It should be noted that the quantity of comb offset values is a quantity of different comb offset values, and a same comb offset value is not counted. For example, there are three comb offset values: 1, 1, and 2. In this case, a quantity of the three comb offset values is 2. Similarly, the quantity of CS values indicates a quantity of different CS values. For example, it is assumed that the reference signal includes N ports, and the N ports occupy K comb offset values and P CS values. In this case, the quantity of comb offset values included in the M combinations is greater than or equal to K, and the quantity of CS offset values included in the M combinations is greater than or equal to P.

**Case 3:** Comb offset values included in the M combinations are at equal intervals, and CS values included in the M combinations are at equal intervals. Alternatively, intervals between every two comb offset values in the comb offset values included in the M combinations are the same, and intervals between every two CS values in the CS values included in the M combinations are the same. In this case, the comb offset values and the CS values included in the M combinations have a specific rule.

For example, the M combinations include A comb offset values, the M combinations include B CS values, and both A and B are positive integers. Herein, A may be considered as a quantity of available CS values, and B may be considered as a quantity of available comb offset values. The A comb offset values are A values evenly distributed in [0, X-1], where X is a comb quantity, and the B CS values are B values evenly distributed in [0, Y-1], where Y is a maximum quantity of CSs. Intervals between every two comb offset values in the A comb offset values are the same, and intervals between every two CS values in the B CS values are the same. For example, a difference between any two adjacent comb offset values in the A comb offset values is a first value, and any two adjacent CS values in the B CS values are second values. The first value is determined based on the comb quantity $K_{TC}$. For example, the first value is $K_{TC}/2$ or $K_{TC}/4$. The second value may be determined based on a quantity of SRS ports $N_{ap}^{\text{SRS,hopping}}$ and $n_{\text{SRS}}^{\text{cs,max}}$, where $N_{ap}^{\text{SRS,hopping}}$ is not a quantity of ports actually occupied by the reference signal, and $N_{ap}^{\text{SRS,hopping}}$ is greater than or equal to $N_{ap}^{\text{SRS}}$.

That M=A×B may be considered that a total of M {CS values and comb offset values} are available. Values of A and B are related to the comb quantity of the reference signal resource and a combination quantity M. Optionally, M is greater than or equal to N. Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

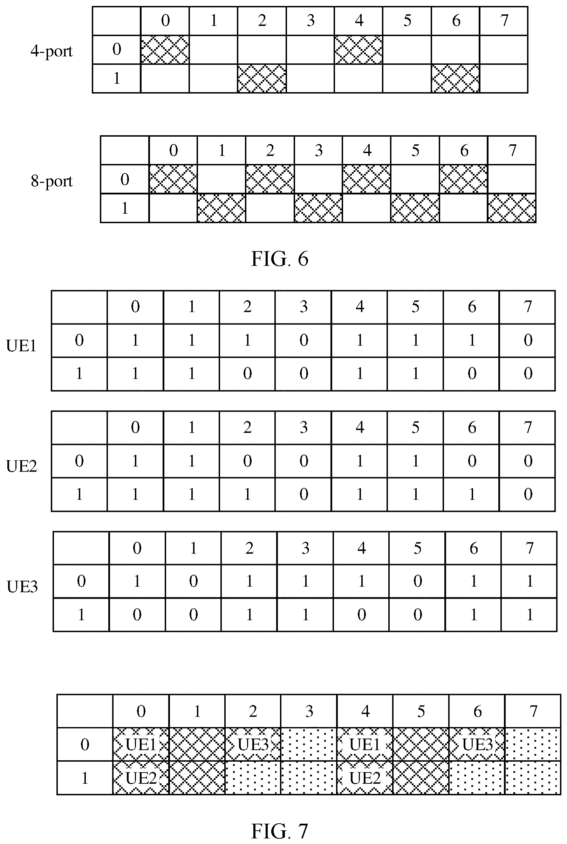

Alternatively, the comb offset values included in the M combinations are consistent with comb offset values occupied by ports in a resource configuration of the reference signal, and the CS values included in the M combinations are consistent with comb offset values occupied by the ports in the resource configuration of the reference signal. For example, FIG. 6 shows M combinations corresponding to each of $N_{ap}^{\text{SRS,hopping}}=4$ and $N_{ap}^{\text{SRS,hopping}}=8$. In FIG. 6, a shaded part shows an available CS value and an available comb offset value. When $N_{ap}^{\text{SRS,hopping}}=4$, the available CS value is a CS value occupied by each port in one 4-port SRS resource configuration, and the available comb offset value is a comb offset value occupied by each port in the 4-port SRS resource configuration. When $N_{ap}^{\text{SRS,hopping}}=8$, the available CS value is a CS value occupied by each port in one 8-port SRS resource configuration, and the available comb offset value is a comb offset value occupied by each port in the 8-port SRS resource configuration. Alternatively, when $N_{ap}^{\text{SRS,hopping}}=8$, the available CS value is a CS value occupied by each port in two 4-port SRS resource configurations, and the available comb offset value is a comb offset value occupied by each port in the two 4-port SRS resource configurations.

Because the comb offset values and the CS values that are included in the M combinations have a specific rule, the terminal apparatus may determine a target CS value and a target comb offset value based on M and the rule of the comb offset values and the CS values that are included in the M combinations. In Case 3, the indication information may indicate a value of M. A manner of notifying the M combinations is simple, and notification overheads can be reduced. For example, the indication information may include the value of M, or the indication information may include information indicating M.

For Case 3, it may also be understood that M is the quantity of available CS values and the quantity of available comb offset values. The network apparatus indicates M based on the indication information, to indicate the available CS values and the available comb offset values to the terminal apparatus. The terminal apparatus may determine the target CS value from the A available CS values based on M, and determine the target comb offset value from the B available comb offset values based on M. How to determine the target CS value from the A available CS values and determine the target comb offset value from the B available comb offset values is described below.

It should be noted that the foregoing Case 1 and Case 2 are applicable to a scenario in which the terminal apparatus uses both the COH and the CSH. Alternatively, in Case 1 and Case 2, the M combinations indicated by the indication information are actually M two-dimensional {CS values and comb offset values}, or the M combinations indicated by the indication information are actually M two-dimensional {hopping values of CS values and hopping values of comb offset values}. For example, for the bitmap whose length is Q, $Q=K_{TC} \times n_{\text{SRS}}^{\text{cs,max}}$. Based on a same idea, a design of the indication information may also be applicable to a scenario in which only the COH or the CSH is used.

For example, for the COH, the indication information may be a bitmap whose length is L, and L may be determined based on $K_{TC}$ and a quantity of ports of one SRS resource, or L is determined based on $K_{TC}$ and a quantity of CS values corresponding to each port in one SRS resource. For the separate COH, it may be considered that a comb offset value is fixed, and the M combinations indicated by the indication information are actually M one-dimensional CS values, or the M combinations indicated by the indication information are actually hopping values of M one-dimensional CS values.

For the CSH, the indication information may be a bitmap whose length is R, and R may be determined based on $n_{\text{SRS}}^{\text{cs,max}}$ and a quantity of combs corresponding to one SRS resource. For the separate CSH, it may be considered that a CS value is fixed, and the M combinations indicated by the indication information are actually M one-dimensional comb offset values, or the M combinations indicated by the indication information are actually hopping values of M one-dimensional comb offset values.

In some embodiments, the network apparatus may indicate, based on signaling, that the M combinations are configured for the COH and the CSH, or that the M combinations are configured for the CSH or the COH. For example, the network apparatus may indicate, based on 1-bit indication information A, that the M combinations are configured for the COH and the CSH, or that the M combinations are configured for the CSH or the COH. For example, that a value of the indication information A is 1 indicates that the M combinations are configured for the COH and the CSH. On the contrary, that the value of the indication information A is 0 indicates that the M combinations are configured for the CSH or the COH.

Similarly, Case 3 is applicable to a scenario in which the terminal apparatus uses both the COH and the CSH. In Case 3, M is actually a product of the quantity of available CS values and the quantity of available comb offset values. Based on a same idea, a design of the indication information may also be applicable to a scenario in which only the COH or the CSH is used. For example, for the separate COH, it may be considered that a comb offset value is fixed, and the indication information may indicate A, which actually indicates the A available CS values or hopping values of the A available CS values. For the separate CSH, it may be considered that a CS value is fixed, and the indication information may indicate B, which actually indicates the B available comb offset values or hopping values of the B available comb offset values.

S502: The network apparatus determines, based on the M combinations, a first pseudo-random sequence, and a first time unit, a target CS value and a target comb offset value that correspond to the reference signal in the first time unit.

S503: The terminal apparatus determines, based on the indication information, a first pseudo-random sequence, and a first time unit, a target CS value and a target comb offset value that correspond to the reference signal in the first time unit.

A manner in which the terminal apparatus determines, based on the indication information, the first pseudo-random sequence, and the first time unit, the target CS value and the target comb offset value that correspond to the reference signal in the first time unit is the same as a manner in which the network apparatus determines, based on the M combinations, the first pseudo-random sequence, and the first time unit, the target CS value and the target comb offset value that correspond to the reference signal in the first time unit. Unless otherwise specified, the following uses an example in which the network apparatus determines the target CS value and the target comb offset value. In addition, an execution sequence of S502 and S503 is not limited. To be specific, S502 may be performed before S503, or may be performed after S503.

In embodiments of this application, the first pseudo-random sequence $c(n)$ whose length is $M_{PN}$ is defined as:

$$c(n) = \left(x_1(n + N_C) + x_2(n + N_C)\right) \bmod 2$$

$$x_1(n + 31) = \left(x_1(n + 3) + x_1(n)\right) \bmod 2$$

$$x_2(n + 31) = \left(x_2(n + 3) + x_2(n + 2) + x_2(n + 1) + x_2(n)\right) \bmod 2$$

Herein, $N_C = 1600$; initialization of a first M sequence $x_1(n)$ is $x_1(0) = 1$; $x_1(n) = 0$, $n = 1,2,......,30$; and initialization of a second M sequence $x_2(n)$ is $C_{\text{init}} = \sum_{i=0}^{30} x_2(i) \cdot 2^i$, and $c_{\text{init}}$ is an initialization parameter. Specifically, the base station and the terminal device may determine a random number $\delta$ based on any one of the following formulas.

Formula 1:

$$\delta = \sum_{m=0}^{7} 2^m \times c(8T + m)$$

Formula 2:

$$\delta = \left(\sum_{m=0}^{7} 2^m \times c(8T + m)\right) \bmod n_{SRS}^{cs,\max}$$

Formula 3:

$$\delta = \left( \sum_{m=0}^{7} 2^m \times c\left(8T + m\right) \right) \bmod K \times n_{SRS}^{cs,\max}$$

Herein, T is an identifier corresponding to the first time unit.

Specifically, in Example 1, $T = n_{s,f}^{\mu} N_{\text{symb}}^{\text{slot}} + l_0 + l'$ . Herein, $c(i)$ indicates a pseudo-random sequence. In embodiments of this application, the pseudo-random sequence may be determined based on the initialization parameter $c_{\text{init}}$. Optionally, the terminal device initializes the pseudo-random sequence at the beginning of each frame based on $c_{\text{init}}$ . $c_{\text{init}} = N_{ID}^{\text{cell}}$ , where $N_{ID}^{\text{cell}}$ indicates an identifier (ID) of a cell. $c_{\text{init}} = n_{ID}^{SRS}$ , where $n_{ID}^{SRS}$ indicates an identifier (ID) of an SRS, and $c_{\text{init}}$ may be determined based on a higher-layer parameter. In Example 1, $n_{s,f}^{\mu}$ indicates a corresponding slot number in a frame in which the first time unit is located when a subcarrier interval is configured as $\mu$ (it may be understood that, for different values of $\mu$, quantities of slots included in the frame are different); $N_{symb}^{slot}$ indicates a quantity of symbols in each slot; $l_0$ indicates a start orthogonal frequency division multiplexing (orthogonal frequency division multiplexing, OFDM) symbol location in one slot corresponding to the first time unit; and $l'$ indicates an OFDM symbol location that corresponds to the first time unit and that is relative to $l_0$, and $l' \in \left( 0, 1, \dots N_{symb}^{SRS} - 1 \right)$ . With Example 1, the CS value/comb offset value may be randomized in one frame.

In Example 2, $T = n_f \times N_{\text{slot}}^{\text{frame},\mu} + n_{s,f}^{\mu} N_{\text{symb}}^{\text{slot}} + l_0 + l'$ , where $n_f$ indicates a frame number corresponding to the first time unit, and $N_{\text{slot}}^{\text{frame},\mu}$ indicates a quantity of slots in one frame. Optionally, the terminal device initializes the pseudo-random sequence at the beginning of every N frames based on $c_{\text{init}}$, where N may be greater than or equal to 1. Based on Example 2, the cyclic shift value may be randomized in different frames, and a randomization effect is better.

Optionally, $T = \left( n_f \bmod P \right) \times N_{\text{slot}}^{\text{frame},\mu} + n_{s,f}^{\mu} N_{\text{symb}}^{\text{slot}} + l_0 + l'$ , where $P$ may be considered as a randomization reset periodicity, and a unit is a quantity of frames.

In Example 3, $T = n_f \times N_{\text{slot}}^{\text{frame},\mu} + n_{s,f}^{\mu} N_{\text{symb}}^{\text{slot}}$ . Optionally, the terminal device initializes the pseudo-random sequence in every N frames based on $c_{\text{init}}$, where N may be greater than or equal to 1. Based on Example 3, the cyclic shift value may be randomized at a granularity of a slot. A randomization effect is good, and consistency in one slot can reduce receiving and sending complexity.

In Example 4, $T = n_f \times N_{\text{slot}}^{\text{frame},\mu} + n_{s,f}^{\mu} N_{\text{symb}}^{\text{slot}} + l_0 + \left\lfloor l' / R \right\rfloor$ , where $R$ is a quantity of repeated transmissions, or is a repetition factor, namely, a quantity of times of sending a same signal in time domain. Optionally, the terminal device initializes the pseudo-random sequence at the beginning of every N frames based on $c_{\text{init}}$, where N may be greater than or equal to 1. In Example 4, the cyclic shift value may be randomized at a granularity of one repeated transmission, a randomization effect is good, and complexity can be reduced if the cyclic shift value is consistent in one repeated transmission.

In Example 5, $T = \left\lfloor l' / R \right\rfloor$ . Optionally, the terminal device initializes the pseudo-random sequence at the beginning of each slot based on $c_{\text{init}}$, where N may be greater than or equal to 1. Based on Example 5, the cyclic shift value may be randomized only in one repeated transmission, and interference cancellation may be directly performed through coherent combination of repeated transmissions. This is applicable to an aperiodic SRS.

In Example 6, $T = n_f \times N_{\text{slot}}^{\text{frame},\mu} + n_{s,f}^{\mu} N_{\text{symb}}^{\text{slot}} + l_0 + \left\lfloor l' / \lambda \right\rfloor$ , where $\lambda$ is an intra-slot frequency hopping periodicity. Optionally, the terminal device initializes the pseudo-random sequence at the beginning of every N frames based on $c_{\text{init}}$, where N may be greater than or equal to 1.

For Case 1 and Case 2, the network apparatus may randomly select one combination (for example, a first combination) from the M combinations. For example, the network apparatus may generate one random number (for example, a first random number) based on the first pseudo-random sequence and the first time unit, where the first random number is used to select the first combination from the M combinations. For example, the M combinations are sequentially numbered, and the first combination is a combination whose number is a first random number. A CS value and a comb offset value that are included in the first combination may be used to determine a target CS value and a target comb offset value that correspond to the reference signal in a time unit. Alternatively, a hopping value of a CS value and a hopping value of a comb offset value that are included in the first combination may be used to determine a target CS value and a target comb offset value that correspond to the reference signal in a time unit.

For Case 3, the network apparatus may determine A and B based on M. For example, M=B, and each of the A comb offset values may correspond to B/A CS values in the B CS values. Alternatively, M=A*B, and each of the A comb offset values corresponds to the B CS values. Further, the B available CS values may be determined based on B, and the A available comb offset values may be determined based on A. The network apparatus generates the first random number based on the first pseudo-random sequence and the first time unit, and determines the target CS value and the target comb offset value from the A available comb offset values and the B available CS values based on the first random number.

Because the first random number is randomly generated, the randomized first combination may be limited based on an actually occupied resource, so that interference between reference signals of any two terminal devices can be randomized, a resource conflict between the terminal devices can be avoided, and channel estimation accuracy can be improved. It should be understood that each port in the reference signal resource may be determined based on an index of the port, a reference value of a CS value, and the hopping value of the CS value in the randomly selected first combination. Each port corresponds to the same first combination. A similar mechanism is used to determine the CS value and the comb offset value for each port of the reference signal, so that processing complexity of the terminal can be effectively reduced.

For Case 1 to Case 3, the following sequentially describes how the network apparatus or the terminal apparatus determines the target CS value and the target comb offset value.

**Case 1:** The M combinations include a hopping value of one CS value and a hopping value of one comb offset value.

For one port of the reference signal, a CS value used by the port may be determined based on an index of the port, a reference value of the CS value, and the hopping value of the CS value in the randomly selected first combination, and a comb offset value used by the port may be determined based on the index of the port, the comb offset reference value, and a hopping value of the comb offset value in the randomly selected first combination.

Specifically, the network apparatus may determine, according to the following formula, the comb $k_{TC}^{(p_i)}$ occupied by the port $p_i$ of the reference signal:

$$
k_{TC}^{(p_i)} = \begin{cases} \left(\bar{k}_{TC} + \bar{k}_{TC,hopping} + K_{TC}/2\right) \bmod K_{TC} & \text{if } N_{ap}^{SRS} = 4, p_i \in \{1001, 1003\}, \text{ and } n_{SRS}^{cs,max} = 6 \\ \left(\bar{k}_{TC} + \bar{k}_{TC,hopping} + K_{TC}/2\right) \bmod K_{TC} & \text{if } N_{ap}^{SRS} = 4, p_i \in \{1001, 1003\}, \text{ and } n_{SRS}^{cs} \in \{n_{SRS}^{cs,max}/2, \dots, n_{SRS}^{cs,max} - 1\} \\ \left(\bar{k}_{TC} + \bar{k}_{TC,hopping}\right) \bmod K_{TC} & \text{otherwise} \end{cases}
$$

Herein, $\bar{k}_{TC,hopping}$ is the hopping value of the comb offset value in the first combination randomly selected from the M combinations; $\bar{k}_{TC,hopping}$ satisfies: $\bar{k}_{TC,hopping} = \left\lfloor \dfrac{f(i)}{n_{SRS}^{cs,max}} \right\rfloor$, where $f(i)$ is a number of an $i^{th}$ bit that is set to 1 in the bitmap whose length is Q; and $i = c(f) \bmod B_1$, where $c(f)$ is the first pseudo-random sequence, $B_1$ is a quantity of bits that are set to 1 in the bitmap whose length is Q, and mod is a modulo operation.

The network apparatus may determine, according to the following formula, that the cyclic shift $\alpha_i$ corresponding to the port $p_i$ of the reference signal satisfies the following:

$$
\alpha_i = 2\pi \frac{n_{SRS}^{cs,i}}{n_{SRS}^{cs,max}}
$$

$$
n_{SRS}^{cs,i} = \begin{cases} \left(n_{SRS}^{cs} + n_{SRS,hopping}^{cs} + \dfrac{n_{SRS}^{cs,max}\lfloor(p_i - 1000)/2\rfloor}{N_{ap}^{SRS}/2}\right) \bmod n_{SRS}^{cs,max} & \text{if } N_{ap}^{SRS} = 4 \text{ and } n_{SRS}^{cs,max}=6 \\ \left(n_{SRS}^{cs} + n_{SRS,hopping}^{cs} + \dfrac{n_{SRS}^{cs,max}(p_i - 1000)}{N_{ap}^{SRS}}\right) \bmod n_{SRS}^{cs,max} & \text{otherwise} \end{cases}
$$

Herein, $n_{\text{SRS,hopping}}^{\text{cs}}$ is the hopping value of the CS value in the first combination randomly selected from the M combinations; and $n_{\text{SRS,hopping}}^{\text{cs}}$ satisfies: $n_{\text{SRS,hopping}}^{\text{cs}} = f(i) \bmod n_{\text{SRS}}^{\text{cs,max}}$ .

It should be noted that the number of the bit is also referred to as a bit number. For example, numbers of bits in the bitmap whose length is Q sequentially start from 0 to Q-1 in an order from a least significant bit to a most significant bit of the bitmap, or the numbers of the bits in the bitmap whose length is Q sequentially start from 0 to Q-1 in an order from a most significant bit to a least significant bit of the bitmap. In embodiments of this application, a resource corresponding to the bit number may be mapped in a first-time-domain-then-frequency-domain manner, or may be mapped in a first-frequency-domain-then-time-domain manner. The first-time-domain-then-frequency-domain manner may be understood as: In ascending order of comb offsets, CS values corresponding to a first comb offset value are first mapped, then CS values corresponding to a next comb offset value are mapped, and the rest can be deduced by analogy. For example, CS values corresponding to comb offset 0 is first mapped, and then CS values corresponding to comb offset 1 is mapped. The first-frequency-domain-then-time-domain manner may be understood as: In ascending order of CS values, comb offset values corresponding to a first CS value are first mapped, then comb offset values corresponding to a next CS value are mapped, and the rest can be deduced by analogy. For example, comb offset values corresponding to CS 0 is first mapped, then comb offset values corresponding to CS 1 is mapped, and the rest can be deduced by analogy.

In Case 1, the indication information actually indicates a CS value and a comb offset value that are occupied by a port 0 of the reference signal, and an available CS value and an available comb offset value. It is simple for the terminal apparatus to calculate a port location, so that processing complexity of the terminal apparatus can be reduced. However, because ports 0 of reference signals of different terminal apparatuses occupy different resources, the network apparatus needs to configure respective M combinations for the terminal apparatuses.

The terminal apparatus determines the target CS value and the target comb offset value based on the first combination in the M combinations, so that a conflict with a CS value and a comb offset value that are used by another terminal apparatus can be avoided. For example, for $K_{\text{TC}} = 2$, there are eight CS values in a network, and an available CS value may be an initially configured CS value of one SRS resource. For example, four CS values in one 4-port SRS resource configuration are available CS values, that is, there are four available CS values. The network apparatus may separately configure corresponding available comb offset values for the four available CS values, to avoid a CS value conflict and a comb offset value conflict between terminal devices.

For example, FIG. 7 is a diagram in which the network apparatus independently configures respective M combinations for three UEs. It can be learned from FIG. 7 that a total combination quantity Q is $K_{\text{TC}} \times n_{\text{SRS}}^{\text{cs,max}}$ , a value of Q shown in the figure is 16, the M combinations are indicated from the Q combinations, and each UE may independently indicate M combinations. In the figure, 0 to 7 on a horizontal axis are CS values, and 0 and 1 on a vertical axis are comb offset values. Specifically, for example, the CS value is a hopping value of the CS value, and the comb offset value is a hopping value of the comb offset value. In M combinations of UE1, a set of hopping values of available CS values corresponding to a case in which a hopping value of a comb offset value is 0 is {0, 1, 2, 4, 5, 6}, and a set of hopping values of available CS values corresponding to a case in which the hopping value of the comb offset value is 1 is {0, 1, 4, 5}. In M combinations of UE2, a set including hopping values of available CS values corresponding to a case in which a hopping value of a comb offset value is 0 is {0, 1, 4, 5}, and a set including hopping values of available CS values corresponding to a case in which the hopping value of the comb offset value is 1 is {0, 1, 2, 4, 5, 6}. In M combinations of UE3, a set including hopping values of available CS values corresponding to a case in which a hopping value of a comb offset value is is {0, 2, 3, 4, 6, 7}, and a set including hopping values of available CS values corresponding to a case in which the hopping value of the comb offset value is 1 is {2, 3, 6, 7}.

The network apparatus configures the M combinations for each terminal apparatus, so that a CS value conflict and a comb offset value conflict between terminal devices can be avoided. For example, still refer to FIG. 7. When a reference comb offset value of UE1 is 0 and a CS value is 0, an initial comb offset value of UE1 port 0 is 0 and a CS value is 0, and an initial comb offset value of UE1 port 1 is 0 and a CS value is 4. UE1 port 0 may transition from an initial state to a state in which a comb offset value=0 and a CS value=1, 2, 4, 5, 6. UE1 port 1 may transition from an initial state to a state in which a comb offset value=0 and a CS value=5, 6, 0, 1, 2. Alternatively, UE1 port 0 may transition from an initial state to a state in which a comb offset value=1 and a CS value=0, 1, 4, 5. UE1 port 1 may transition from an initial state to a state in which a comb offset value=1 and a CS value=4, 5, 0, 1. A collision between a resource occupied by UE1 and a resource occupied by the legacy UE can be avoided. Similarly, a collision between a resource occupied by UE2 and UE3 and the resource occupied by the legacy UE can be avoided. In addition, UE1 to UE3 may generate a same random number in the first time unit by using a same configuration. Further, because initial states of UE1 to UE3 are staggered, resources corresponding to UE1 to UE3 in the first time unit are also staggered.

**Case 2:** Each of the M combinations includes one CS value and one comb offset value.

For one port of the reference signal, a CS value used by the port may be determined based on an index of the port and a CS value in the randomly selected first combination, and a comb offset value used by the port may be determined based on the index of the port and the comb offset value in the randomly selected first combination.

Compared with Case 1, in Case 2, a bit number that is in numbers of the bits set to 1 in the bitmap with the length of Q and to which $\bar{k}_{TC}$ and $n_{SRS}^{cs}$ are mapped needs to be determined. In other words, the terminal apparatus needs to first determine a bit that is set to 1 in the bitmap with the length of Q and to which $\bar{k}_{TC}$ and $n_{SRS}^{cs}$ that correspond to port 0 of the reference signal correspond.

Specifically, the terminal apparatus may determine, according to the following formula, the comb $k_{TC}^{(p_i)}$ occupied by the port $p_i$ of the reference signal:

$$
k_{TC}^{(p_i)}
= \begin{cases}
\left(\bar{k}_{TC,HOPPING} + K_{TC}/2\right) \bmod K_{TC} & \text{if } N_{ap}^{SRS} = 4,\, p_i \in \{1001, 1003\},\, \text{and } n_{SRS}^{cs,max} = 6 \\
\left(\bar{k}_{TC,HOPPING} + K_{TC}/2\right) \bmod K_{TC} & \text{if } N_{ap}^{SRS} = 4,\, p_i \in \{1001, 1003\},\, \text{and } n_{SRS}^{cs} \in \left\{n_{SRS}^{cs,max}/2, \ldots, n_{SRS}^{cs,max} - 1\right\} \\
\left(\bar{k}_{TC,HOPPING}\right) \bmod K_{TC} & \text{otherwise}
\end{cases}
$$

Herein, $\bar{k}_{TC,HOPPING}$ is the comb offset value in the first combination randomly selected from the M combinations; $\bar{k}_{TC,HOPPING}$ satisfies: $\bar{k}_{TC,HOPPING} = \left\lfloor \dfrac{f(i)+g(i)}{n_{SRS}^{cs,max}} \right\rfloor$, where $f(i)$ is a number of an $i^{th}$ bit that is set to 1 in the bitmap whose length is Q; and $i = C(f) \bmod B_1$, where $C(f)$ is the first pseudo-random sequence, $B_1$ is a quantity of bits that are set to 1 in the bitmap whose length is Q, and mod is a modulo operation.

The terminal apparatus may determine, according to the following formula, that the cyclic shift $\alpha_i$ corresponding to the port $p_i$ of the reference signal satisfies the following:

$$
\alpha_i = 2\pi \frac{n_{SRS}^{cs,i}}{n_{SRS}^{cs,max}}
$$

$$
n_{SRS}^{cs,i} = \begin{cases}
\left(n_{SRS,HOPPING}^{cs} + \dfrac{n_{SRS}^{cs,max}\lfloor(p_i - 1000)/2\rfloor}{N_{ap}^{SRS}/2}\right) \bmod n_{SRS}^{cs,max} & \text{if } N_{ap}^{SRS} = 4 \text{ and } n_{SRS}^{cs,max}=6 \\
\left(n_{SRS,HOPPING}^{cs} + \dfrac{n_{SRS}^{cs,max}(p_i - 1000)}{N_{ap}^{SRS}}\right) \bmod n_{SRS}^{cs,max} & \text{otherwise}
\end{cases}
$$

Herein, $n_{SRS,HOPPING}^{cs}$ is the CS value in the first combination randomly selected from the M. $n_{SRS,HOPPING}^{cs}$ satisfies: $n_{SRS,HOPPING}^{cs} = (f(i) + g(i)) \bmod n_{SRS}^{cs,max}$. Herein, $i = C(f) \bmod B_1$, where $C(f)$ is the first pseudo-random sequence, $B_1$ is the quantity of bits that are set to 1 in the bitmap whose length is Q, and mod is a modulo operation; and $g(x)$ may be used to determine a bit that is set to 1 in the bitmap whose length is Q corresponding to $\bar{k}_{TC}$ and $n_{SRS}^{cs}$ that correspond to port 0 of the reference signal.

Compared with Case 1, in Case 2, a start number of a bit that is set to 1 and that is in the bitmap whose length is Q may be configured by using $g(x)$, so that resources occupied by port 0 of reference signals of different terminal apparatuses are the same. Therefore, the network apparatus does not need to configure M combinations for each terminal apparatus, and processing complexity of the network apparatus can be reduced.

**Case 3:** Comb offset values included in the M combinations have a specific rule, and CS values included in the M combinations also have a specific rule. For example, the comb offset values included in the M combinations are at equal intervals, and the CS values included in the M combinations are at equal intervals. Alternatively, intervals between every two comb offset values in A comb offset values included in the M combinations are the same, and intervals between every two CS values in B CS values included in the M combinations are the same. Both A and B are positive integers. The A comb offset values are available comb offset values, and the B CS values are also available CS values. That M=A×B may be understood as that M is a quantity of available combinations, where the available combinations include the A comb offset values and the B CS values.

Optionally, the A comb offset values are A values evenly distributed in [0, X-1], where X is a comb quantity, or it may be understood that the A comb offset values are arranged in ascending order or descending order, and an interval between any two adjacent comb offset values is X/A. The B CS values are B values evenly distributed in [0, Y-1], where Y is a maximum quantity of CSs, or it may be understood that the B CS values are arranged in ascending order or descending order, and an interval between any two adjacent CS values is Y/B.

Optionally, values of A and B are related to the comb quantity $K_{TC}$ of the reference signal resource and/or the combination quantity M and/or the CS reference value $n_{SRS}^{cs}$. Optionally, M is greater than or equal to a quantity N of SRS ports in the SRS resource. An example is given below.

When M=2, A=1 and B=2. This is irrelevant to a value of $K_{TC}$.

When M=4 and $n_{SRS}^{cs} < n_{SRS}^{cs,max}$, A=1 and B=4. When M=4 and $n_{SRS}^{cs} \geq n_{SRS}^{cs,max}$, A=2 and B=2, where in this case, each comb bias value corresponds to two same CS values. Alternatively, when M=4 and $n_{SRS}^{cs} \geq n_{SRS}^{cs,max}$, A=2 and B=4, where in this case, each comb bias value corresponds to two different CS values.

When M=8 and $K_{TC}$ = 2, A=2 and B=4, where in this case, each comb bias value corresponds to four same CS values; or A=2 and B=8, where in this case, each comb bias value corresponds to four different CS values.

When M=8 and $K_{TC}$ = 4, A=4 and B=2, where in this case, each comb bias value corresponds to two same CS values; or A=4 and B=8, where in this case, each comb bias value corresponds to two different CS values. When M=8 and $K_{TC}$ = 8, A=4 and B=2, where in this case, each comb bias value corresponds to two same CS values.

In Case 3, the network apparatus/terminal apparatus may determine A and B based on M indicated by the indication information. For example, M=B, and each of the A comb offset values may correspond to B/A CS values in the B CS values. Alternatively, M=A*B, and each of the A comb offset values corresponds to the B CS values. B may be used to determine the B CS values included in the M combinations, and A may be used to determine the A comb offset values included in the M combinations. The network apparatus/terminal apparatus generates the first random number based on the first pseudo-random sequence and the first time unit, and determines the target CS value and the target comb offset value from the M combinations based on the first random number.

Specifically, the network apparatus/terminal apparatus may determine, according to the following formula, the comb $k_{TC}^{(p_i)}$ occupied by the port $p_i$ of the reference signal:

$$k_{TC}^{(p_i)} = \begin{cases} (\bar{k}_{TC} + \bar{k}_{TC,hopping} + K_{TC}/2) \bmod K_{TC} & \text{if } N_{ap}^{SRS} = 4, p_i \in \{1001, 1003\}, \text{ and } n_{SRS}^{cs,max} = 6 \\ (\bar{k}_{TC} + \bar{k}_{TC,hopping} + K_{TC}/2) \bmod K_{TC} & \text{if } N_{ap}^{SRS} = 4, p_i \in \{1001, 1003\}, \text{ and } n_{SRS}^{cs} \in \{n_{SRS}^{cs,max}/2, \dots, n_{SRS}^{cs,max} - 1\} \\ (\bar{k}_{TC} + \bar{k}_{TC,hopping}) \bmod K_{TC} & \text{otherwise} \end{cases}$$

Herein, $\bar{k}_{TC,hopping}$ is the hopping value of the comb offset value in the first combination randomly selected from the M combinations; and $\bar{k}_{TC,hopping}$ satisfies: $\bar{k}_{TC,hopping} = \begin{cases} K_{TC}/2 & \text{if } N_{ap}^{SRS} = \frac{4}{8}, C(f) \bmod N_{ap}^{SRS,hopping} \\ 0 & \text{otherwise} \end{cases}$ is an odd number.

The network apparatus/terminal apparatus may determine, according to the following formula, that the cyclic shift $\alpha_i$ corresponding to the port $p_i$ of the reference signal satisfies the following:

$$\alpha_i = 2\pi \frac{n_{SRS}^{cs,i}}{n_{SRS}^{cs,max}}$$

$$n_{SRS}^{cs,i} = \begin{cases} \left( n_{SRS}^{cs} + n_{SRS,hopping}^{cs} + \dfrac{n_{SRS}^{cs,max} \lfloor (p_i - 1000)/2 \rfloor}{N_{ap}^{SRS}/2} \right) \bmod n_{SRS}^{cs,max} & \text{if } N_{ap}^{SRS} = 4 \text{ and } n_{SRS}^{cs,max} = 6 \\ \left( n_{SRS}^{cs} + n_{SRS,hopping}^{cs} + \dfrac{n_{SRS}^{cs,max} (p_i - 1000)}{N_{ap}^{SRS}} \right) \bmod n_{SRS}^{cs,max} & \text{otherwise} \end{cases}$$

Herein, $n_{\text{SRS,hopping}}^{\text{cs}}$ is the hopping value of the CS value in the first combination randomly selected from the M combinations; and $n_{\text{SRS,hopping}}^{\text{cs}}$ satisfies: $n_{\text{SRS,hopping}}^{\text{cs}} = \dfrac{n_{\text{SRS}}^{\text{cs,max}} \times C(f) \bmod N_{\text{ap}}^{\text{SRS, hopping}}}{N_{\text{ap}}^{\text{SRS, hopping}}}$ .

Optionally, when A=1, $\overline{k}_{TC,hopping} = 0$; when A=2, $\overline{k}_{TC,hopping} = \{0, K_{TC}/2\}$; or when A=4, $\overline{k}_{TC,hopping} = \{0, K_{TC}/4, K_{TC}/2, K_{TC}/4\}$.

Optionally, $n_{\text{SRS,hopping}}^{\text{cs}} = \dfrac{n_{\text{SRS}}^{\text{cs,max}} \times C(f) \bmod B}{B}$ , where B is determined based on M.

S504: The terminal apparatus sends the reference signal in the first time unit based on the target CS value and the target comb offset value.

After determining the target CS value and the target comb offset value, the terminal apparatus may generate a sequence of the reference signal based on the target CS value and a base sequence, and determine, based on the target comb offset value, a frequency-domain resource location occupied by the reference signal, to send the reference signal at the frequency-domain resource location in the first time unit.

S505: The network apparatus sends the reference signal in the first time unit based on the target CS value and the target comb offset value.

After determining the target CS value and the target comb offset value, the network apparatus may generate the reference signal based on the target CS value and the target comb offset value, receive the reference signal from the terminal apparatus in the first time unit, and detect the reference signal.

In embodiments of this application, an available CS value of the terminal apparatus and an available comb offset value corresponding to the available CS value may be (pre)configured or predefined. In other words, an available range of the CS value and an available range of the comb offset value may be specified. The target comb offset value used by the terminal device is within the specified available range of the comb offset value, and the target CS value used by the terminal device is within the specified available range of the CS value. In this way, a conflict between CS values or comb offset values used by different terminal devices can be avoided, so that the terminal devices can use the COH and the CSH at the same time, to maximize randomization of interference between reference signals of any two terminal devices in a cell.

In the foregoing embodiments provided in this application, the method provided in embodiments of this application is described from a perspective of interaction between the terminal apparatus and the network apparatus. The steps performed by the network apparatus may alternatively be separately implemented by different communication apparatuses. For example, a first apparatus is configured to generate indication information, and a second apparatus is configured to send the indication information. In other words, the first apparatus and the second apparatus jointly complete the steps performed by the network apparatus in embodiments of this application. A specific division manner is not limited in this application. When a network architecture includes one or more DUs, one or more CUs, and one or more radio units (radio units, RUs), the steps performed by the network apparatus may be separately implemented by the DUs, the CUs, and the RUs. To implement functions in the foregoing methods provided in embodiments of this application, the terminal apparatus and the network apparatus may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraint conditions of the technical solutions.

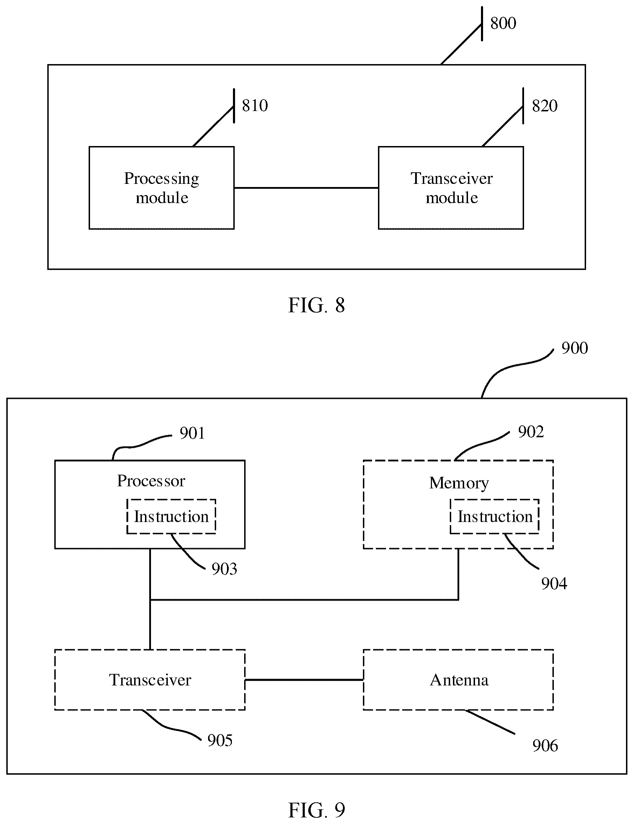

FIG. 8 is a block diagram of a communication apparatus 800 according to an embodiment of this application. The communication apparatus 800 may correspondingly implement functions or steps implemented by the terminal apparatus or the network apparatus in the foregoing method embodiments. The communication apparatus 800 may include a processing module 810 and a transceiver module 820. Optionally, a storage unit may be further included. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing units may be independently disposed, or may be partially or completely integrated.

It should be understood that the processing module 810 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 820 is an interface circuit of the apparatus, and is configured to receive a signal from another apparatus. For example, when the apparatus is implemented in a form of a chip, the transceiver module 820 is an interface circuit used by the chip to receive a signal from another chip or apparatus, or is an interface circuit used by the chip to send a signal to another chip or apparatus.

The communication apparatus 800 may be the network apparatus or the terminal apparatus in the foregoing embodiments, or may be a function module in the network device or the terminal device. For example, the communication apparatus is a chip (system) in the network device or the terminal device. When the communication apparatus 800 is the network device or the terminal device, the processing module 810 may be, for example, a processor, and the transceiver module 820 may be, for example, a transceiver. Optionally, the transceiver may include a radio frequency circuit, and the storage unit may be, for example, a memory. For example, when the communication apparatus 800 is the chip used for the network device or the terminal device, the processing module 810 may be, for example, a processor, and the transceiver module 820 may be, for example, an input/output interface, a pin, or a circuit. The processing module 810 may execute computer-executable instructions stored in the storage unit. Optionally, the storage unit is a storage unit in the chip, for example, a register or a cache. Alternatively, the storage unit may be a storage unit that is in the network device, the terminal device, or a location management device and that is located outside the chip, for example, a read-only memory (read-only memory, ROM), another type of static storage device that can store static information and instructions, or a random access memory (random access memory, RAM).

In some embodiments, the communication apparatus 800 can correspondingly implement behavior and functions of the terminal apparatus in the foregoing method embodiments, for example, implement the method performed by the terminal apparatus in embodiments in FIG. 5. The communication apparatus 800 may be a terminal device, or may be a component (for example, a chip or a circuit) used in the terminal device, or may be a chip or a chip set in the terminal device or a part that is of the chip and that is configured to perform a related method function. For example, the transceiver module 820 may be configured to perform S501 and S504 in embodiments shown in FIG. 5, and/or configured to support another process of the technology described in this specification. The processing module 810 is configured to perform S503 in embodiments shown in FIG. 5, and/or configured to support another process of the technology described in this specification.

For example, the transceiver module 820 may be configured to receive indication information, where the indication information indicates M combinations, and each combination includes one CS value and one comb offset value; or each combination includes a hopping value of one CS value and a hopping value of one comb offset value, where M is a positive integer. The processing module 810 may be configured to determine, based on the indication information, a first pseudo-random sequence, and a first time unit, a target CS value and a target comb offset value that correspond to a reference signal in the first time unit. The transceiver module 820 may be further configured to send the reference signal in the first time unit based on the target CS value and the target comb offset value.

Optionally, the M combinations correspond to one reference signal resource, and the reference signal resource includes N reference signal ports.

Optionally, the N reference signal ports all correspond to the M combinations.

Optionally, that each of the M combinations includes N CS values and N comb offset values is equivalent to that a set of comb offset values corresponding to each of every N CS values or a set of CS values corresponding to every N comb offset values is specified in the M combinations. Similarly, that each combination includes hopping values of N CS values and hopping values of N comb offset values is equivalent to that hopping values of comb offset values corresponding to the hopping values of the N CS values or hopping values of CS values corresponding to the hopping values of the N comb offset values are specified in each combination.

In an optional implementation, the processing module 810 is specifically configured to: generate a first random number based on the first pseudo-random sequence and the first time unit, determine a first combination from the M combinations based on the first random number, and then, determine the target CS value and the target comb offset value based on the first combination.

In an optional implementation, a quantity of comb offset values included in the M combinations is greater than or equal to a quantity of comb offset values occupied by the reference signal, and a quantity of CS values included in the M combinations is greater than or equal to a quantity of CS values occupied by the reference signal.

In an optional implementation, the indication information further indicates the M combinations from Q combinations, Q is a positive integer, and Q is greater than or equal to M; and a quantity of comb offset values included in the Q combinations is less than or equal to a comb quantity of the reference signal, and a quantity of CS values included in the Q combinations is less than or equal to a maximum quantity of CS values corresponding to the comb quantity of the reference signal.

Optionally, Q=A*B, and a maximum quantity of CS values corresponding to a comb quantity B configured for the reference signal resource is A.

In an optional implementation, the indication information is a bitmap whose length is Q, and a bit that is set to 1 in the bitmap corresponds to the M combinations.

In an optional implementation, the processing module 810 is specifically configured to: determine, based on the first random number, a first bit from the bit that is set to 1 in the bitmap, and determine a combination corresponding to the first bit as the first combination.

In an optional implementation, the processing module 810 is specifically configured to: for a first port in at least one port of the reference signal, determine the target CS value of the first port based on a CS value in the first combination and an index of the first port, and determine the target comb offset value of the first port based on a comb offset value in the first combination and the index of the first port.

In an optional implementation, the processing module 810 is specifically configured to: for a first port in at least one port of the reference signal, determine the target CS value of the first port based on a CS reference value, a CS value in the first combination, and an index of the first port, and determine the target comb offset value of the first port based on a comb offset reference value, a comb offset value in the first combination, and the index of the first port.

In an optional implementation, the M combinations include A comb offset values, the M combinations include B CS values, and both A and B are positive integers. The A comb offset values are A values evenly distributed in [0, X-1], where X is a comb quantity, and the B CS values are B values evenly distributed in [0, Y-1], where Y is a maximum quantity of CSs.

Optionally, values of A and B are related to a comb quantity of the reference signal resource and a combination quantity M. Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

In an optional implementation, the indication information is information indicating a value of M.

In an optional implementation, the processing module 810 is specifically configured to: determine A and B based on M, where $M=A \times B$; determine, based on a CS reference value and B, the B CS values included in the M combinations; determine, based on a comb offset reference value and A, the A comb offset values included in the M combinations; generate a first random number based on the first pseudo-random sequence and the first time unit; and then, determine the target CS value and the target comb offset value from the M combinations based on the first random number.

In an optional implementation, the processing module 810 is specifically configured to: determine that M=B, where each of the A comb offset values may respectively correspond to B/A CS values of the B CS values; or determine that M=A*B, where each of the A comb offset values corresponds to the B CS values.

For another example, the transceiver module 820 is configured to receive indication information, where the indication information indicates M, and M is a positive integer. The processing module 810 is configured to determine, based on M, a first pseudo-random sequence, and a first time unit, a target CS value and a target comb offset value that correspond to a reference signal in the first time unit. The transceiver module 820 is further configured to send the reference signal in the first time unit based on the target CS value and the target comb offset value.

In an optional implementation, the M combinations include A comb offset values, the M combinations include B CS values, and both A and B are positive integers. The A comb offset values are A values evenly distributed in [0, X-1], where X is a comb quantity, and the B CS values are B values evenly distributed in [0, Y-1], where Y is a maximum quantity of CSs.

Optionally, values of A and B are related to a comb quantity of the reference signal resource and a combination quantity M. Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

In an optional implementation, the processing module 810 is specifically configured to: determine A and B based on M, where $M=A \times B$; determine the B available CS values based on a CS reference value and B; determine the A available comb offset values based on a comb offset reference value and A; generate a first random number based on the first pseudo-random sequence and the first time unit; and determine the target CS value and the target comb offset value from the A available comb offset values and the B available CS values based on the first random number.

In an optional implementation, the processing module 810 is specifically configured to: determine that M=B, where each of the A comb offset values may respectively correspond to B/A CS values of the B CS values; or determine that M=A*B, where each of the A comb offset values corresponds to the B CS values.

In some embodiments, the communication apparatus 800 can correspondingly implement behavior and functions of the network apparatus in the foregoing method embodiments, for example, implement the method performed by the network apparatus in embodiments in FIG. 5. The communication apparatus 800 may be the network device, or may be a component (for example, a chip or a circuit) used in the network device, or may be a chip or a chip set in the network device or a part that is of the chip and that is configured to perform a related method function. For example, the transceiver module 820 may be configured to perform S501 and S505 in embodiments shown in FIG. 5, and/or configured to support another process of the technology described in this specification. The processing module 810 is configured to perform S502 in embodiments shown in FIG. 5, and/or configured to support another process of the technology described in this specification.

For example, the transceiver module 820 may be configured to send indication information, where the indication information indicates M combinations, and each combination includes one CS value and one comb offset value; or each combination includes a hopping value of one CS value and a hopping value of one comb offset value, where M is a positive integer. The processing module 810 may be configured to determine, based on the M combinations, a first pseudo-random sequence, and a first time unit, a target CS value and a target comb offset value that correspond to a reference signal in the first time unit. The transceiver module 820 may be further configured to receive the reference signal in the first time unit based on the target CS value and the target comb offset value.

Optionally, the M combinations correspond to one reference signal resource, and the reference signal resource includes N reference signal ports. Optionally, the N reference signal ports all correspond to the M combinations.

Optionally, that each of the M combinations includes N CS values and N comb offset values is equivalent to that a set of comb offset values corresponding to each of every N CS values or a set of CS values corresponding to every N comb offset values is specified in the M combinations. Similarly, that each combination includes hopping values of N CS values and hopping values of N comb offset values is equivalent to that hopping values of comb offset values corresponding to the hopping values of the N CS values or hopping values of CS values corresponding to the hopping values of the N comb offset values are specified in each combination.

In an optional implementation, the processing module 810 is specifically configured to: generate a first random number based on the first pseudo-random sequence and the first time unit, determine a first combination from the M combinations based on the first random number, and then, determine the target CS value and the target comb offset value based on the first combination.

In an optional implementation, a quantity of comb offset values included in the M combinations is greater than or equal to a quantity of comb offset values occupied by the reference signal, and a quantity of CS values included in the M combinations is greater than or equal to a quantity of CS values occupied by the reference signal.

In an optional implementation, the indication information further indicates the M combinations from Q combinations, Q is a positive integer, and Q is greater than or equal to M; and a quantity of comb offset values included in the Q combinations is less than or equal to a comb quantity of the reference signal, and a quantity of CS values included in the Q combinations is less than or equal to a maximum quantity of CS values corresponding to the comb quantity of the reference signal.

Optionally, Q=A*B, and a maximum quantity of CS values corresponding to a comb quantity B configured for the reference signal resource is A.

In an optional implementation, the indication information is a bitmap whose length is Q, and a bit that is set to 1 in the bitmap corresponds to the M combinations.

In an optional implementation, the processing module 810 is specifically configured to: determine, based on the first random number, a first bit from the bit that is set to 1 in the bitmap, and determine a combination corresponding to the first bit as the first combination.

In an optional implementation, the processing module 810 is specifically configured to: for a first port in at least one port of the reference signal, determine the target CS value of the first port based on a CS value in the first combination and an index of the first port, and determine the target comb offset value of the first port based on a comb offset value in the first combination and the index of the first port.

In an optional implementation, the processing module 810 is specifically configured to: for a first port in at least one port of the reference signal, determine the target CS value of the first port based on a CS reference value, a CS value in the first combination, and an index of the first port, and determine the target comb offset value of the first port based on a comb offset reference value, a comb offset value in the first combination, and the index of the first port.

In an optional implementation, the M combinations include A comb offset values, the M combinations include B CS values, and both A and B are positive integers. The A comb offset values are A values evenly distributed in [0, X-1], where X is a comb quantity, and the B CS values are B values evenly distributed in [0, Y-1], where Y is a maximum quantity of CSs.

Optionally, values of A and B are related to a comb quantity of the reference signal resource and a combination quantity M. Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

In an optional implementation, the indication information is information indicating a value of M.

In an optional implementation, the processing module 810 is specifically configured to: determine A and B based on M, where M=A×B; determine, based on a CS reference value and B, the B CS values included in the M combinations; determine, based on a comb offset reference value and A, the A comb offset values included in the M combinations; generate a first random number based on the first pseudo-random sequence and the first time unit; and then, determine the target CS value and the target comb offset value from the M combinations based on the first random number.

In an optional implementation, the processing module 810 is specifically configured to: determine that M=B, where each of the A comb offset values may respectively correspond to B/A CS values of the B CS values; or determine that M=A*B, where each of the A comb offset values corresponds to the B CS values.

For another example, the transceiver module 820 is configured to send indication information, where the indication information indicates M, and M is a positive integer. The processing module 810 is configured to determine, based on M, a first pseudo-random sequence, and a first time unit, a target CS value and a target comb offset value that correspond to a reference signal in the first time unit. The transceiver module 820 is further configured to receive the reference signal in the first time unit based on the target CS value and the target comb offset value.

In an optional implementation, the M combinations include A comb offset values, the M combinations include B CS values, and both A and B are positive integers. The A comb offset values are A values evenly distributed in [0, X-1], where X is a comb quantity, and the B CS values are B values evenly distributed in [0, Y-1], where Y is a maximum quantity of CSs.

Optionally, values of A and B are related to a comb quantity of the reference signal resource and a combination quantity M. Optionally, M is greater than or equal to N.

Optionally, M is preconfigured, and the values of A and B are determined based on M. Specifically, when M=2, A=1 and B=2. When M=4, A=1 and B=4, or A=2 and B=2 (each comb bias value corresponds to two CS values), or A=2 and B=4 (each comb bias value corresponds to two of CS values). When M=8, A=2 and B=4 (each comb bias value corresponds to four CS values), or A=2 and B=8 (each comb bias value corresponds to four of CS values). Alternatively, when M=8, A=4 and B=2 (each comb bias value corresponds to two CS values).

In an optional implementation, the processing module 810 is specifically configured to: determine A and B based on M, where M=A×B; determine the B available CS values based on a CS reference value and B; determine the A available comb offset values based on a comb offset reference value and A; generate a first random number based on the first pseudo-random sequence and the first time unit; and determine the target CS value and the target comb offset value from the A available comb offset values and the B available CS values based on the first random number.

In an optional implementation, the processing module 810 is specifically configured to: determine that M=B, where each of the A comb offset values may respectively correspond to B/A CS values of the B CS values; or determine that M=A*B, where each of the A comb offset values corresponds to the B CS values.

When the communication apparatus 800 is a chip-type apparatus or circuit, the transceiver module may be an input/output circuit and/or a communication interface, and the processing module is an integrated processor, a microprocessor, or an integrated circuit.

FIG. 9 is a block diagram of a communication apparatus 900 according to an embodiment of this application. The communication apparatus 900 may be a terminal apparatus, and can implement functions of the terminal apparatus in the method provided in embodiments of this application. Alternatively, the communication apparatus 900 may be an apparatus that can support the terminal apparatus in implementing a corresponding function in the method provided in embodiments of this application. For example, the communication apparatus 900 is a terminal device or a chip system in a terminal device. Alternatively, the communication apparatus 900 may be a network apparatus, and can implement functions of the network apparatus in the method provided in embodiments of this application. Alternatively, the communication apparatus 900 may be an apparatus that can support the network apparatus in implementing a corresponding function in the method provided in embodiments of this application. For example, the communication apparatus 900 is a network device or a chip system in a network device. In this embodiment of this application, the chip system may include a chip, or may include a chip and another discrete component. For specific functions, refer to the descriptions in the foregoing method embodiments.

The communication apparatus 900 includes one or more processors 901, configured to implement or support the communication apparatus 900 in implementing functions of the terminal apparatus or the network apparatus in the method provided in embodiments of this application. For details, refer to detailed descriptions in the method example. Details are not described herein again. The processor 901 may also be referred to as a processing unit or a processing module, and may implement a specific control function. The processor 901 may be a general-purpose processor, a special-purpose processor, or the like. For example, the processor includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 900, execute a software program, and/or process data. Different processors may be independent components, or may be integrated into one or more processors, for example, integrated into one or more application-specific integrated circuits.

Optionally, the communication apparatus 900 includes one or more memories 902, configured to store instructions 904. The instructions may be run on the processor 901, so that the communication apparatus 900 performs the method in the foregoing method embodiments. The memory 902 is coupled to the processor 901. The coupling in this embodiment of this application may be an indirect coupling or a communication connection between apparatuses, units, or modules in an electrical form, a mechanical form, or another form, and is used for information exchange between the apparatuses, the units, or the modules. The processor 901 may operate in cooperation with the memory 902. At least one of the at least one memory may be included in the processor. It should be noted that the memory 902 is not necessary, and therefore, is illustrated by using a dashed line in FIG. 9.

Optionally, the memory 902 may further store data. The processor and the memory may be separately disposed, or may be integrated together. In embodiments of this application, the memory 902 may be a non-volatile memory, for example, a hard disk drive (hard disk drive, HDD) or a solid-state drive (solid-state drive, SSD), or may be a volatile memory (volatile memory), for example, a RAM. The memory is any other medium that can be used to carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Optionally, the communication apparatus 900 may include instructions 903 (which may sometimes also be referred to as code or a program). The instructions 903 may be run on the processor, so that the communication apparatus 900 performs the method in the foregoing embodiments. The processor 901 may store data.

Optionally, the communication apparatus 900 may further include a transceiver 905 and an antenna 906. The transceiver 905 may be referred to as a transceiver unit, a transceiver module, a transceiver machine, a transceiver circuit, a transceiver, an input/output interface, or the like, and is configured to implement a transceiver function of the communication apparatus 900 through the antenna 906.

The processor 901 and the transceiver 905 in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions of the terminal device or the terminal apparatus. Details are not described herein again.

Optionally, the communication apparatus 900 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 900 may include more or fewer components, some components are integrated, or some components are split. The components may be implemented by hardware, software, or a combination of software and hardware.

It should be noted that, the communication apparatus in the foregoing embodiments may be a terminal device (or a network device), or may be a circuit, or may be a chip used in a terminal device (or a network device), or may be another combined component or part having the terminal device (or the network device), or the like. When the communication apparatus is a terminal device (or a network device), the transceiver module may be a transceiver, and may include an antenna, a radio frequency circuit, and the like, and the processing module may be a processor, for example, a CPU. When the communication apparatus is a component having a function of the terminal device (or the network device), the transceiver module may be a radio unit, and the processing module may be the processor. When the communication apparatus is a chip system, the communication apparatus may be an FPGA, a dedicated ASIC, a system on chip (system on chip, SoC), a CPU, a network processor (network processor, NP), a DSP, a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a communication system. Specifically, the communication system includes at least one terminal apparatus, and may further include at least one network apparatus. For example, the communication system includes a terminal apparatus configured to implement a related function in FIG. 5 and a network apparatus configured to implement a related function in FIG. 5. Alternatively, the communication system includes at least one terminal device and at least one network device. For example, the communication system includes a terminal device configured to implement a function related to the terminal apparatus in FIG. 5 and a network device configured to implement a function related to the network apparatus in FIG. 5.

An embodiment of this application further provides a computer-readable storage medium, including instructions. When the instructions are run on a computer, the computer is enabled to perform the method performed by the terminal apparatus or the network apparatus in FIG. 5.

An embodiment of this application further provides a computer program product, including instructions. When the instructions are run on a computer, the computer is enabled to perform the method performed by the terminal apparatus or the network apparatus in FIG. 5.

An embodiment of this application provides a chip system. The chip system includes a processor, may further include a memory, and is configured to implement a function of the terminal apparatus or the network apparatus in the foregoing method. The chip system may include a chip, or may include a chip and another discrete component.

To implement the functions of the communication apparatuses in FIG. 8 and FIG. 9, an embodiment of this application further provides a chip, including a processor, configured to support the communication apparatus in implementing the functions of the terminal apparatus or the network apparatus in the foregoing method embodiments. In a possible design, the chip is connected to a memory, or the chip includes a memory. The memory is configured to store a computer program or instructions and data that are necessary for the communication apparatus.

In embodiments of this application, "system" and "network" may be used interchangeably. "A plurality of" means two or more. In view of this, "a plurality of" may also be understood as "at least two" in embodiments of this application. "At least one" may be one or more. For example, at least one is one, two, or more. For example, including at least one means that one, two, or more are included, and there is no limitation on which is included. For example, if at least one of A, B, and C is included, A, B, C, A and B, A and C, B and C, or A, B, and C may be included. Similarly, understandings of descriptions such as "at least one" are also similar. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

Unless otherwise specified, ordinal numbers such as "first" and "second" mentioned in embodiments of this application are used to distinguish a plurality of objects, and are not used to limit a sequence, a time sequence, a priority, or an importance degree of the plurality of objects. In addition, descriptions of "first" and "second" do not mean that objects are necessarily different. For example, a first combination and a second combination indicate that there are two combinations, and priorities, importance degrees, or the like of the two combinations are not limited. In embodiments of this application, "if" and "assuming that" may be interchangeable, and unless otherwise specified, "when" and "in a case in which..." may be interchangeable.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with various illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

When the functions are implemented in a form of a software function unit and sold or used as an independent product, the functions may be stored in a computer-readable storage medium. Based on such an understanding, the technical solutions of this application essentially, the contributing part, or some of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a ROM, a RAM, a magnetic disk, or an optical disc.

It is clearly that, a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A communication method, comprising:

   receiving indication information, wherein the indication information indicates M combinations, and each combination comprises one CS value and one comb offset value; or each combination comprises a hopping value of one CS value and a hopping value of one comb offset value, wherein M is a positive integer;

   determining, based on the indication information, a first pseudo-random sequence, and a first time unit, a target CS value and a target comb offset value that correspond to a reference signal in the first time unit; and

   sending the reference signal in the first time unit based on the target CS value and the target comb offset value.

2. The method according to claim 1, wherein the determining, based on the indication information, the first pseudo-random sequence, and the first time unit, the target CS value and the target comb offset value that correspond to the reference signal comprises:

   generating a first random number based on the first pseudo-random sequence and the first time unit;

   determining a first combination from the M combinations based on the first random number; and

   determining the target CS value and the target comb offset value based on the first combination.

3. The method according to claim 2, wherein a quantity of comb offset values comprised in the M combinations is greater than or equal to a quantity of comb offset values occupied by the reference signal, and a quantity of CS values comprised in the M combinations is greater than or equal to a quantity of CS values occupied by the reference signal.

4. The method according to any one of claims 1 to 3, wherein the indication information further indicates the M combinations from Q combinations, Q is a positive integer, and Q is greater than or equal to M; and a quantity of comb offset values comprised in the Q combinations is less than or equal to a comb quantity of the reference signal, and a quantity of CS values comprised in the Q combinations is less than or equal to a maximum quantity of CS values corresponding to the comb quantity of the reference signal.

5. The method according to claim 4, wherein the indication information is a bitmap bitmap whose length is Q, and a bit that is set to 1 in the bitmap corresponds to the M combinations.

6. The method according to claim 5, wherein determining the first combination from the M combinations based on the first random number comprises:
   determining, based on the first random number, a first bit from the bit that is set to 1 in the bitmap, and determining a combination corresponding to the first bit as the first combination.

7. The method according to claim 6, wherein each combination comprises one CS value and one comb offset value, and determining the target CS value and the target comb offset value based on the first combination comprises:

   for a first port in at least one port of the reference signal, determining the target CS value of the first port based on a CS value in the first combination and an index of the first port; and

for the first port in the at least one port of the reference signal, determining the target comb offset value of the first port based on a comb offset value in the first combination and the index of the first port.

8. The method according to claim 6, wherein each combination comprises a hopping value of one CS value and a hopping value of one comb offset value, and determining the target CS value and the target comb offset value based on the first combination comprises:

for a first port in at least one port of the reference signal, determining the target CS value of the first port based on a CS reference value, a CS value in the first combination, and an index of the first port; and

for the first port in the at least one port of the reference signal, determining the target comb offset value of the first port based on a comb offset reference value, a comb offset value in the first combination, and the index of the first port.

9. The method according to claim 1, wherein the M combinations comprise A comb offset values, the M combinations comprise B CS values, and both A and B are positive integers; and a difference between any two adjacent comb offset values in the A comb offset values is a first value, and any two adjacent CS values in the B CS values are second values.

10. The method according to claim 1, wherein the indication information is information indicating a value of M.

11. The method according to claim 10, wherein determining, based on the indication information, the first pseudo-random sequence, and the first time unit, the target CS value and the target comb offset value that correspond to the reference signal in the first time unit comprises:

determining A and B based on M, wherein M=A×B, A is a quantity of comb offset values comprised in the M combinations, and B is a quantity of CS values comprised in the M combinations;

determining, based on a CS reference value and B, the B CS values comprised in the M combinations;

determining, based on a comb offset reference value and A, the A comb offset values comprised in the M combinations;

generating a first random number based on the first pseudo-random sequence and the first time unit; and

determining the target CS value and the target comb offset value from the M combinations based on the first random number.

12. A communication method, comprising:

receiving indication information, wherein the indication information indicates M, and M is a positive integer;

determining, based on M, a first pseudo-random sequence, and a first time unit, a target cyclic redundancy CS value and a target comb comb offset value that correspond to a reference signal in the first time unit; and

sending the reference signal in the first time unit based on the target CS value and the target comb offset value.

13. The method according to claim 12, wherein determining, based on M, the first pseudo-random sequence, and the first time unit, the target CS value and the target comb offset value that correspond to the reference signal in the first time unit comprises:

determining A and B based on M, wherein M=A×B, A is a quantity of available comb offset values, and B is a quantity of available CS values;

determining the B available CS values based on a CS reference value and B;

determining the A available comb offset values based on a comb offset reference value and A;

generating a first random number based on the first pseudo-random sequence and the first time unit; and

determining the target CS value and the target comb offset value from the A available comb offset values and the B available CS values based on the first random number.

14. A communication method, comprising:

sending indication information, wherein the indication information indicates M combinations, and each combination comprises one CS value and one comb offset value; or each combination comprises a hopping value of one CS value and a hopping value of one comb offset value, wherein M is a positive integer;

determining, based on the M combinations, a first pseudo-random sequence, and a first time unit, a target CS value and a target comb offset value that correspond to a reference signal in the first time unit; and
receiving the reference signal in the first time unit based on the target CS value and the target comb offset value.

15. The method according to claim 14, wherein the determining, based on the M combinations, the first pseudo-random sequence, and the first time unit, the target CS value and the target comb offset value that correspond to the reference signal comprises:

generating a first random number based on the first pseudo-random sequence and the first time unit;
determining a first combination from the M combinations based on the first random number; and
determining the target CS value and the target comb offset value based on the first combination.

16. The method according to claim 15, wherein a quantity of comb offset values comprised in the M combinations is greater than or equal to a quantity of comb offset values occupied by the reference signal, and a quantity of CS offset values comprised in the M combinations is greater than or equal to a quantity of CS values occupied by the reference signal.

17. The method according to any one of claims 14 to 16, wherein the indication information further indicates the M combinations from Q combinations, Q is a positive integer, and Q is greater than or equal to M; and a quantity of comb offset values comprised in the Q combinations is less than or equal to a comb quantity of the reference signal, and a quantity of CS values comprised in the Q combinations is less than or equal to a maximum quantity of CS values corresponding to the comb quantity of the reference signal.

18. The method according to claim 17, wherein the indication information is a bitmap bitmap whose length is Q, and a bit that is set to 1 in the bitmap corresponds to the M combinations.

19. The method according to claim 18, wherein determining the first combination from the M combinations based on the first random number comprises:
determining, based on the first random number, a first bit from the bit that is set to 1 in the bitmap, and determining a combination corresponding to the first bit as the first combination.

20. The method according to claim 19, wherein each combination comprises one CS value and one comb offset value, and determining the target CS value and the target comb offset value based on the first combination comprises:

for a first port in at least one port of the reference signal, determining the target CS value of the first port based on a CS value in the first combination and an index of the first port; and
for the first port in the at least one port of the reference signal, determining the target comb offset value of the first port based on a comb offset value in the first combination and the index of the first port.

21. The method according to claim 19, wherein each combination comprises a hopping value of one CS value and a hopping value of one comb offset value, and determining the target CS value and the target comb offset value based on the first combination comprises:

for a first port in at least one port of the reference signal, determining the target CS value of the first port based on a CS reference value, a CS value in the first combination, and an index of the first port; and
for the first port in the at least one port of the reference signal, determining the target comb offset value of the first port based on a comb offset reference value, a comb offset value in the first combination, and the index of the first port.

22. The method according to claim 14, wherein the M combinations comprise A comb offset values, the M combinations comprise B CS values, and both A and B are positive integers; and a difference between any two adjacent comb offset values in the A comb offset values is a first value, and any two adjacent CS values in the B CS values are second values.

23. The method according to claim 14, wherein the indication information is information indicating a value of M.

24. The method according to claim 23, wherein determining, based on the indication information, the first pseudo-random sequence, and the first time unit, the target CS value and the target comb offset value that correspond to the reference signal in the first time unit comprises:

determining A and B based on M, wherein M=A×B, A is a quantity of comb offset values comprised in the M combinations, and B is a quantity of CS values comprised in the M combinations;

determining, based on a CS reference value and B, the B CS values comprised in the M combinations;

determining, based on a comb offset reference value and A, the A comb offset values comprised in the M combinations;

generating a first random number based on the first pseudo-random sequence and the first time unit; and

determining the target CS value and the target comb offset value from the M combinations based on the first random number.

25. A communication method, comprising:

sending indication information, wherein the indication information indicates M, and M is a positive integer;

determining, based on M, a first pseudo-random sequence, and a first time unit, a target cyclic redundancy CS value and a target comb comb offset value that correspond to a reference signal in the first time unit; and

receiving the reference signal in the first time unit based on the target CS value and the target comb offset value.

26. The method according to claim 25, wherein determining, based on M, the first pseudo-random sequence, and the first time unit, the target CS value and the target comb offset value that correspond to the reference signal in the first time unit comprises:

determining A and B based on M, wherein M=A×B, A is a quantity of available comb offset values, and B is a quantity of available CS values;

determining the B available CS values based on a CS reference value and B;

determining the A available comb offset values based on a comb offset reference value and A;

generating a first random number based on the first pseudo-random sequence and the first time unit; and

determining the target CS value and the target comb offset value from the A available comb offset values and the B available CS values based on the first random number.

27. A communication apparatus, comprising:

a transceiver module, configured to receive indication information, wherein the indication information indicates M combinations, and each combination comprises one CS value and one comb offset value; or each combination comprises a hopping value of one CS value and a hopping value of one comb offset value, wherein M is a positive integer; and

a processing module, configured to determine, based on the indication information, a first pseudo-random sequence, and a first time unit, a target CS value and a target comb offset value that correspond to a reference signal in the first time unit, wherein

the transceiver module is further configured to send the reference signal in the first time unit based on the target CS value and the target comb offset value.

28. The apparatus according to claim 27, wherein the processing module is specifically configured to:

generate a first random number based on the first pseudo-random sequence and the first time unit;

determine a first combination from the M combinations based on the first random number; and

determine the target CS value and the target comb offset value based on the first combination.

29. The apparatus according to claim 28, wherein a quantity of comb offset values comprised in the M combinations is greater than or equal to a quantity of comb offset values occupied by the reference signal, and a quantity of CS values comprised in the M combinations is greater than or equal to a quantity of CS values occupied by the reference signal.

30. The apparatus according to any one of claims 27 to 29, wherein the indication information further indicates the M combinations from Q combinations, Q is a positive integer, and Q is greater than or equal to M; and a quantity of comb offset values comprised in the Q combinations is less than or equal to a comb quantity of the reference signal, and a quantity of CS values comprised in the Q combinations is less than or equal to a maximum quantity of CS values corresponding to the comb quantity of the reference signal.

31. The apparatus according to claim 30, wherein the indication information is a bitmap bitmap whose length is Q, and a bit that is set to 1 in the bitmap corresponds to the M combinations.

32. The apparatus according to claim 31, wherein the processing module is specifically configured to: determine, based on the first random number, a first bit from the bit that is set to 1 in the bitmap, and determine a combination corresponding to the first bit as the first combination.

33. The apparatus according to claim 32, wherein each combination comprises one CS value and one comb offset value, and the processing module is specifically configured to:

for a first port in at least one port of the reference signal, determine the target CS value of the first port based on a CS value in the first combination and an index of the first port; and
for the first port in the at least one port of the reference signal, determine the target comb offset value of the first port based on a comb offset value in the first combination and the index of the first port.

34. The apparatus according to claim 32, wherein each combination comprises a hopping value of one CS value and a hopping value of one comb offset value, and the processing module is specifically configured to:

for a first port in at least one port of the reference signal, determine the target CS value of the first port based on a CS reference value, a CS value in the first combination, and an index of the first port; and
for the first port in the at least one port of the reference signal, determine the target comb offset value of the first port based on a comb offset reference value, a comb offset value in the first combination, and the index of the first port.

35. The apparatus according to claim 27, wherein the M combinations comprise A comb offset values, the M combinations comprise B CS values, and both A and B are positive integers; and a difference between any two adjacent comb offset values in the A comb offset values is a first value, and any two adjacent CS values in the B CS values are second values.

36. The apparatus according to claim 27, wherein the indication information is information indicating a value of M.

37. The apparatus according to claim 36, wherein based on the indication information, the first pseudo-random sequence, and the first time unit, the processing module is specifically configured to:

determine A and B based on M, wherein M=A×B, A is a quantity of comb offset values comprised in the M combinations, and B is a quantity of CS values comprised in the M combinations;
determine, based on a CS reference value and B, the B CS values comprised in the M combinations;
determine, based on a comb offset reference value and A, the A comb offset values comprised in the M combinations;
generate a first random number based on the first pseudo-random sequence and the first time unit; and
determine the target CS value and the target comb offset value from the M combinations based on the first random number.

38. A communication apparatus, comprising:

a transceiver module, configured to receive indication information, wherein the indication information indicates M, and M is a positive integer; and
a processing module, configured to determine, based on M, a first pseudo-random sequence, and a first time unit, a target cyclic redundancy CS value and a target comb comb offset value that correspond to a reference signal in the first time unit, wherein
the transceiver module is further configured to send the reference signal in the first time unit based on the target CS value and the target comb offset value.

39. The apparatus according to claim 38, wherein based on M, the first pseudo-random sequence, and the first time unit, the processing module is specifically configured to:

determine A and B based on M, wherein M=A×B, A is a quantity of available comb offset values, and B is a quantity of available CS values;
determine the B available CS values based on a CS reference value and B;

determine the A available comb offset values based on a comb offset reference value and A;
generate a first random number based on the first pseudo-random sequence and the first time unit; and
determine the target CS value and the target comb offset value from the A available comb offset values and the B available CS values based on the first random number.

40. A communication apparatus, comprising:

a transceiver module, configured to send indication information, wherein the indication information indicates M combinations, and each combination comprises one CS value and one comb offset value; or each combination comprises a hopping value of one CS value and a hopping value of one comb offset value, wherein M is a positive integer; and
a processing module, configured to determine, based on the M combinations, a first pseudo-random sequence, and a first time unit, a target CS value and a target comb offset value that correspond to a reference signal in the first time unit, wherein
the transceiver module is further configured to receive the reference signal in the first time unit based on the target CS value and the target comb offset value.

41. The apparatus according to claim 40, wherein based on the M combinations, the first pseudo-random sequence, and the first time unit, the processing module is specifically configured to:

generate a first random number based on the first pseudo-random sequence and the first time unit;
determine a first combination from the M combinations based on the first random number; and
determine the target CS value and the target comb offset value based on the first combination.

42. The apparatus according to claim 41, wherein a quantity of comb offset values comprised in the M combinations is greater than or equal to a quantity of comb offset values occupied by the reference signal, and a quantity of CS offset values comprised in the M combinations is greater than or equal to a quantity of CS values occupied by the reference signal.

43. The apparatus according to any one of claims 40 to 42, wherein the indication information further indicates the M combinations from Q combinations, Q is a positive integer, and Q is greater than or equal to M; and a quantity of comb offset values comprised in the Q combinations is less than or equal to a comb quantity of the reference signal, and a quantity of CS values comprised in the Q combinations is less than or equal to a maximum quantity of CS values corresponding to the comb quantity of the reference signal.

44. The apparatus according to claim 43, wherein the indication information is a bitmap bitmap whose length is Q, and a bit that is set to 1 in the bitmap corresponds to the M combinations.

45. The apparatus according to claim 44, wherein the processing module is specifically configured to:
determine, based on the first random number, a first bit from the bit that is set to 1 in the bitmap, and determine a combination corresponding to the first bit as the first combination.

46. The apparatus according to claim 45, wherein each combination comprises one CS value and one comb offset value, and the processing module is specifically configured to:

for a first port in at least one port of the reference signal, determine the target CS value of the first port based on a CS value in the first combination and an index of the first port; and
for the first port in the at least one port of the reference signal, determine the target comb offset value of the first port based on a comb offset value in the first combination and the index of the first port.

47. The apparatus according to claim 45, wherein each combination comprises a hopping value of one CS value and a hopping value of one comb offset value, and the processing module is specifically configured to:

for a first port in at least one port of the reference signal, determine the target CS value of the first port based on a CS reference value, a CS value in the first combination, and an index of the first port; and
for the first port in the at least one port of the reference signal, determine the target comb offset value of the first port based on a comb offset reference value, a comb offset value in the first combination, and the index of the first port.

48. The apparatus according to claim 40, wherein the M combinations comprise A comb offset values, the M combinations comprise B CS values, and both A and B are positive integers; and a difference between any two adjacent comb offset values in the A comb offset values is a first value, and any two adjacent CS values in the B CS values are second values.

49. The apparatus according to claim 40, wherein the indication information is information indicating a value of M.

50. The apparatus according to claim 49, wherein based on the indication information, the first pseudo-random sequence, and the first time unit, the processing module is specifically configured to:

determine A and B based on M, wherein $M = A \times B$, A is a quantity of comb offset values comprised in the M combinations, and B is a quantity of CS values comprised in the M combinations;
determine, based on a CS reference value and B, the B CS values comprised in the M combinations;
determine, based on a comb offset reference value and A, the A comb offset values comprised in the M combinations;
generate a first random number based on the first pseudo-random sequence and the first time unit; and
determine the target CS value and the target comb offset value from the M combinations based on the first random number.

51. A communication apparatus, comprising:

a transceiver module, configured to send indication information, wherein the indication information indicates M, and M is a positive integer; and
a processing module, configured to determine, based on M, a first pseudo-random sequence, and a first time unit, a target cyclic redundancy CS value and a target comb comb offset value that correspond to a reference signal in the first time unit, wherein
the transceiver module is further configured to receive the reference signal in the first time unit based on the target CS value and the target comb offset value.

52. The apparatus according to claim 51, wherein based on M, the first pseudo-random sequence, and the first time unit, the processing module is specifically configured to:

determine A and B based on M, wherein $M = A \times B$, A is a quantity of available comb offset values, and B is a quantity of available CS values;
determine the B available CS values based on a CS reference value and B;
determine the A available comb offset values based on a comb offset reference value and A;
generate a first random number based on the first pseudo-random sequence and the first time unit; and
determine the target CS value and the target comb offset value from the A available comb offset values and the B available CS values based on the first random number.

53. A communication apparatus, wherein the communication apparatus comprises a processor, and the processor is configured to enable the communication apparatus to perform the method according to any one of claims 1 to 11 or claims 12 and 13, or enable the communication apparatus to perform the method according to any one of claims 14 to 24 or claims 25 and 26.

54. A computer-readable storage medium, wherein the computer-readable storage medium comprises instructions, and when the instructions are run, the method according to any one of claims 1 to 11 or claims 12 and 13 is implemented, or the method according to any one of claims 14 to 24 or claims 25 and 26 is implemented.

55. A computer program product, wherein the computer program product comprises instructions, and when the instructions are run, the method according to any one of claims 1 to 11 or claims 12 and 13 is implemented, or the method according to any one of claims 14 to 24 or claims 25 and 26 is implemented.

Network device 1

Network device 2

FIG. 1

(a)  (b)  (c)

FIG. 2

(a)    (b)

FIG. 3

⬚ Corresponding to UE1

⬚ Corresponding to UE2

⬚ Corresponding to UE3

FIG. 4

EP 4 675 965 A1

| Terminal apparatus | | Network apparatus |

S501: Indication information, where the indication information indicates M combinations (each combination includes one CS value and one comb offset value/each combination includes a hopping value of one CS value and a hopping value of one comb offset value)

S502: Determine, based on the M combinations, a first pseudo-random sequence, and a first time unit, a target CS value and a target comb offset value that correspond to a reference signal in the first time unit

S503: Determine, based on the indication information, a first pseudo-random sequence, and a first time unit, a target CS value and a target comb offset value that correspond to a reference signal in the first time unit

S504: Reference signal in the first time unit (which is sent based on the target CS value and the target comb offset value)

S505: Reference signal in the first time unit (which is sent based on the target CS value and the target comb offset value)

FIG. 5

43

| 4-port | | 0 | 1 | 2 | 3 | 4 | 5 | 6 | 7 |
|---|---|---|---|---|---|---|---|---|---|
| | 0 | X | | | | X | | | |
| | 1 | | | X | | | | X | |

| 8-port | | 0 | 1 | 2 | 3 | 4 | 5 | 6 | 7 |
|---|---|---|---|---|---|---|---|---|---|
| | 0 | X | | X | | X | | X | |
| | 1 | | X | | X | | X | | X |

FIG. 6

| UE1 | | 0 | 1 | 2 | 3 | 4 | 5 | 6 | 7 |
|---|---|---|---|---|---|---|---|---|---|
| | 0 | 1 | 1 | 1 | 0 | 1 | 1 | 1 | 0 |
| | 1 | 1 | 1 | 0 | 0 | 1 | 1 | 0 | 0 |

| UE2 | | 0 | 1 | 2 | 3 | 4 | 5 | 6 | 7 |
|---|---|---|---|---|---|---|---|---|---|
| | 0 | 1 | 1 | 0 | 0 | 1 | 1 | 0 | 0 |
| | 1 | 1 | 1 | 1 | 0 | 1 | 1 | 1 | 0 |

| UE3 | | 0 | 1 | 2 | 3 | 4 | 5 | 6 | 7 |
|---|---|---|---|---|---|---|---|---|---|
| | 0 | 1 | 0 | 1 | 1 | 1 | 0 | 1 | 1 |
| | 1 | 0 | 0 | 1 | 1 | 0 | 0 | 1 | 1 |

| | | 0 | 1 | 2 | 3 | 4 | 5 | 6 | 7 |
|---|---|---|---|---|---|---|---|---|---|
| | 0 | UE1 | | UE3 | | UE1 | | UE3 | |
| | 1 | UE2 | | | | UE2 | | | |

FIG. 7

800

Processing module — 810

Transceiver module — 820

FIG. 8

900

Processor — 901

Instruction — 903

Memory — 902

Instruction — 904

Transceiver — 905

Antenna — 906

FIG. 9

## INTERNATIONAL SEARCH REPORT

| | International application No. |
|---|---|
| | **PCT/CN2024/083865** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, ENTXT, 3GPP: 探测参考信号, SRS, 测量, 估计, 随机化, 干扰, 循环移位跳变, CSH, 梳齿偏移跳变, COH, comb, 冲突, 碰撞, 指示信息, 伪随机, 比特位图; Sounding Reference Signal, Cs Hopping, Comb Offset Hopping, Measurement, Estimation, Randomization, Interference, Collision, Indication Information, Pseudo-Random, Bitmap

**C. DOCUMENTS CONSIDERED TO BE RELEVANT**

| Category* | Citation of document, with indication, where appropriate, of the relevant passages | Relevant to claim No. |
|---|---|---|
| A | CN 114008945 A (LG ELECTRONICS, INC.) 01 February 2022 (2022-02-01) entire document | 1-55 |
| A | CN 114208328 A (NTT DOCOMO, INC.) 18 March 2022 (2022-03-18) entire document | 1-55 |
| A | EP 3820101 A1 (FRAUNHOFER-GESELLSCHAFT ZUR FORDERUNG DER ANGEWANDTEN FORSCHUNG E.V.) 12 May 2021 (2021-05-12) entire document | 1-55 |
| A | US 2020350970 A1 (QUALCOMM INC.) 05 November 2020 (2020-11-05) entire document | 1-55 |
| A | PANASONIC. "R1-110211 "CS Offset Values and Comb Assignment for Multi-antenna SRS"" *3GPP Tsg_ran\WG1_RL1*. No. TSGR1_63b, 31 January 2011 (2011-01-31), entire document | 1-55 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 May 2024** | **24 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/083865** |

### C. DOCUMENTS CONSIDERED TO BE RELEVANT

| Category* | Citation of document, with indication, where appropriate, of the relevant passages | Relevant to claim No. |
|---|---|---|
| A | Lenovo. "R1-2300514 "Discussion of SRS Enhancement_Final"" *3GPP Tsg_ran\Wg1_rl1*, 17 February 2023 (2023-02-17), entire document | 1-55 |

Form PCT/ISA/210 (second sheet) (July 2022)

# EP 4 675 965 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 114008945 | A | 01 February 2022 | KR | 20210153737 | A | 17 December 2021 |
| | | | | EP | 3965346 | A1 | 09 March 2022 |
| | | | | EP | 3965346 | A4 | 27 July 2022 |
| | | | | WO | 2020222621 | A1 | 05 November 2020 |
| | | | | US | 2022236366 | A1 | 28 July 2022 |
| CN | 114208328 | A | 18 March 2022 | | None | | |
| EP | 3820101 | A1 | 12 May 2021 | US | 2022271982 | A1 | 25 August 2022 |
| | | | | EP | 3820102 | A1 | 12 May 2021 |
| | | | | WO | 2021089732 | A1 | 14 May 2021 |
| | | | | EP | 4055789 | A1 | 14 September 2022 |
| | | | | EP | 4055789 | B1 | 20 December 2023 |
| US | 2020350970 | A1 | 05 November 2020 | WO | 2020227106 | A1 | 12 November 2020 |
| | | | | US | 11509372 | B2 | 22 November 2022 |
| | | | | EP | 3963814 | A1 | 09 March 2022 |

Form PCT/ISA/210 (patent family annex) (July 2022)

**EP 4 675 965 A1**

**Patent documents cited in the description**

- CN 202310388840